# EUROPEAN PATENT SPECIFICATION

(11) **EP 4 577 035 B1**
(45) Date of publication and mention of the grant of the patent: **28.10.2026**
(21) Application number: 23761748.5
(22) Date of filing: 18.08.2023
(51) Int. Cl.: A01D 34/00, G05D 1/00, G05D 1/20

(54) **GENERATION OF A VISIBLY DISCERNIBLE PATTERN IN A LAWN**
ERZEUGUNG EINES SICHTBAR ERKENNBAREN MUSTERS IN EINEM RASEN
GÉNÉRATION D'UN MOTIF VISIBLEMENT DISCERNABLE DANS UNE PELOUSE

(30) Priority: 26.08.2022 DK PA202200789
(43) Date of publication of application: 02.07.2025
(73) Proprietor: Nordlys Trading ApS, 7500 Holstebro (DK)
(72) Inventor: BJERRE, Claus Ravnborg, 7860 Spøttrup (DK)
(74) Representative: Patentgruppen A/S
(86) International application number: PCT/DK2023/050204
(87) International publication number: WO 2024/041709

(56) References cited:
- US-A1- 2005 038 578
- US-A1- 2011 166 705
- US-A1- 2012 290 165
- US-A1- 2016 150 739
- US-A1- 2022 022 386

## Description

### Field of the invention

The present invention relates to a method for generating a visually discernible pattern in a lawn, a lawn maintenance system for generating a visually discernible pattern in a lawn, and a computer program.

### Background of the invention

The aesthetic appearance of turfed sports areas such as football pitches or golf courses is very important especially if the area is shown on television. For example, in football there has been a longstanding practice of generating visually discernible patterns, such as striped and checkered patterns, in the football pitch. Besides the mere visual appearance, such patterns may serve a practical role as they facilitate easier determination of the positioning of players on the pitch, which is of benefit to line judges and spectators either present at the pitch or watching from the comfort at their home in front of the television.

Such patterns are usually made by groundsmen or greenkeepers, and up to this date many of these still rely on purely manual ways of generating the visually discernible patterns. The patterns are typically made by mowing and/or rolling the grass of the pitch/course in particular directions causing the grass to deflect in these directions, and by applying different directions areas of different visual contrast is made due to the areas reflecting light differently.

Typically, the patterns generated are constrained by the geometry of the equipment being used for mowing and/or rolling. Therefore, there exists a need of a versatile way of applying patterns.

US 2005/038578 A1 discloses a method of operating a land maintenance vehicle over a work area. The vehicle may be used to perform a variety of ground maintenance tasks such as mowing, rolling, slitting, hollow coring or aeration. The travel of the vehicle to perform work in regions of the work area may be divided into working strokes and manoeuvres, manoeuvres being the route travelled between working strokes.

### Summary of the invention

The inventors have identified the above-mentioned problems and challenges related to generation of patterns, and subsequently made the below-described invention which may improve versatility in generation of visually discernible patterns in lawns.

An aspect of the invention relates to a method for generating a visually discernible pattern in a lawn, said method comprising the steps of:
- providing a lawn maintenance vehicle on a lawn, said lawn maintenance vehicle comprising a lawn maintenance tool,
- manoeuvring said lawn maintenance vehicle on said lawn such that said lawn maintenance tool travels along a plurality of maintenance paths including a first maintenance path and a second maintenance path,
- wherein said plurality of maintenance paths are calculated using a computer processing arrangement, said calculation being based on a digital representation of said lawn and a pattern to be generated in said lawn, said pattern comprising a plurality of zones including a first zone having a first lawn maintenance direction and a second zone having a second lawn maintenance direction different from said first lawn maintenance direction,
- wherein said first and second maintenance paths are arranged in said first zone such that a first overlap is formed between said first and second maintenance paths, wherein one of said first and second maintenance paths is arranged such that a second overlap is formed between said one maintenance path and said second zone, wherein said first overlap is different from said second overlap, and
- wherein said visually discernible pattern is generated in said lawn by said lawn maintenance tool being moved along said plurality of maintenance paths.

Thereby is provided a versatile method for generating a visually discernible pattern in a lawn. According to the method, a lawn maintenance vehicle is made to manoeuvre such that a lawn maintenance tool thereof follows a plurality of maintenance paths on the lawn, ensuring that a visually discernible pattern is made visible in the lawn. The method is advantageous for a number of reasons:

First, as the method involves manoeuvring a lawn maintenance vehicle such that a lawn maintenance tool thereof travels along a first and a second maintenance path of the first zone, it is possible for a zone of the visually discernible pattern to be wider than a working width of the lawn maintenance tool.

Second, as a first overlap is allowed between the two maintenance paths, it is possible to generate different visually discernible patterns having different geometries using the same lawn maintenance vehicle. For example, by use of the method, it is possible for the same lawn maintenance vehicle to generate visually discernible patterns in lawns for use in different fields of sports such as football, American football, and golf. Thus, the versatility of a lawn maintenance device is improved by use of the method.

Third, by allowing a second overlap with a neighbouring zone it is ensured that errors relating to guidance and control of the lawn maintenance device can be compensated for. Thereby, the actual maintenance paths traversed by the lawn maintenance tool may fully cover the first zone.

Fourth, as the first and second overlaps are different the method becomes highly versatile, as the overlaps can be independent from one another. As an example, the second overlap may be chosen/defined based on considerations concerning accuracy in guiding and/or driving the lawn maintenance vehicle (or lawn maintenance tool thereof) across the lawn, and not be a consequence of the compliance of the width of the lawn maintenance tool and the width of the zone.

Fifth, the width of a zone can be independent of the width of the lawn maintenance tool.

By the term "lawn" is understood both a lawn comprising natural grass, a lawn comprising artificial grass, or a hybrid lawn comprising hybrid grass which is a mixture of natural grass supported by artificial fibres. Such lawns may also be referred to as a turfs.

By the term "lawn maintenance vehicle" is understood any kind of vehicle capable of manoeuvring about on a lawn while maintaining the lawn using a lawn maintenance tool. The term "vehicle" may both encompass robotic vehicles, e.g., self-driving vehicles, and vehicles that are operated by a driver. In preferred embodiments of the invention, the lawn maintenance vehicle comprises one or more on-board motors for driving the vehicle, however, in alternative embodiments of the invention, the lawn maintenance vehicle may be pushed or pulled by another vehicle carrying one or more motors. Examples of lawn maintenance vehicles include robotic lawn mowers, lawn tractors, or any kind of vehicle capable of carrying a tool for maintaining a lawn. In the case of a self-driving lawn maintenance vehicle, the vehicle is configured to automatically execute the step of manoeuvring according, and in the case of a manually operated vehicle, the method may include displaying driving instructions to a driver of the vehicle, such that the driver may steer the vehicle in a way that ensures that the lawn maintenance tool traverses the plurality of maintenance paths.

By the term "lawn maintenance tool" is understood any kind of tool capable of performing a maintenance operation to a lawn. Such maintenance operations may include, among others, mowing (or cutting) the lawn, rolling the lawn, brushing the lawn, cultivating the lawn, planning the lawn, spike rolling the lawn, stamping (or pressing) the lawn. The effect of the maintenance operations may be that parts of the lawn (e.g., straws) are folded or bended in the direction along which the lawn maintenance tool moves/traverses. The lawn maintenance tool may encompass a single tool such as a single mower, brush, roller, etc., however the term may also be used to encompass a number of tools, such as a number of mowers, brushes, rollers, etc., which together are arranged to perform maintenance operations to the lawn.

By the term "maintenance path" is understood a section of a route along which the lawn maintenance tool of the lawn maintenance vehicle is to be driven. A maintenance path is thereby a path along which the maintenance tool should perform a maintenance operation to the lawn. The plurality of maintenance paths thereby forms part of the total route along which the lawn maintenance tool of the lawn maintenance vehicle is to be driven. In some situations, where the lawn maintenance tool is arranged in a central position of the lawn maintenance vehicle, the maintenance paths may coincide with the paths to be driven by the lawn maintenance vehicle (referred to as vehicle paths in the following), however, in other situations, where the lawn maintenance tool is arranged off-centre to the lawn maintenance vehicle, the maintenance paths may not coincide with the vehicle paths and the maintenance paths and vehicle paths may be substantially parallel paths. A maintenance path may be of any type such as a straight path, a curved path, or any combination thereof. The maintenance path may be expressed as a digital path, e.g., by a set of coordinates defining a route/course to be followed by the tool of the lawn maintenance vehicle, or in some situations as mentioned above, a course also to be followed by the lawn maintenance vehicle. Besides the digital representation, the maintenance path may also be made visible in the lawn, once the lawn maintenance tool has traversed the path, as a lawn maintenance operation to the lawn has occurred along the path.

By the term "computer processing arrangement" is understood any kind of computing device capable of processing digital data. The computer processing arrangement may be a single local computing device, such as a computer processor of a personal computer (PC), a laptop, a tablet, a smartphone, a smart watch, or indeed any electronic device capable of processing digital data, or it may be a distributed computing system comprising a number of individual computer processors. In an embodiment of the invention, the computer processing arrangement is a cloud-based system which is accessible to other electronic devices including personal computers (PCs), laptops, tablets, smartphones, smartwatches, or any other electronic device capable of processing digital data.

By the term "digital representation" of a lawn is understood any kind of digitally implemented representation of a lawn which is readable by a computer processing arrangement. The representation may range from e.g., raw data, such as coordinates of geometrically important positions, for example coordinates of corner positions of the lawn, to e.g., pictorial representations of the lawn. The digital representation of the lawn may facilitate a digital working environment wherein a number of computer calculations can be performed concerning maintenance paths to be followed by a lawn maintenance tool of a lawn maintenance vehicle manoeuvring about on the lawn. The digital representation of the lawn may include information relating to any of size, shape, topography, and position of the lawn.

By the term "pattern" is understood any kind of design or motif including any number of geometric shapes such as stripes/rectangles, squares, circles, half-circles, and triangles. The geometric shapes may be visually discernible from one another once generated in a lawn by virtue of different apparent contrast (the perceived brightness difference between light and dark areas). Such difference in apparent contrast is achievable by ensuring that the lawn is treated differently from one zone to another. For example, by mowing and/or rolling grass in one particular direction in one zone is achieved that most of the grass is folded in that particular direction. Next, by mowing and/or rolling in an opposite direction in a different zone is achieved that most of the grass in that zone is folded in the opposite direction. Thereby is achieved two zones with grass folded in opposite directions. This has a profound effect to the visual appearance of the two zones. As blades of grass reflect sunlight, the grass which is folded/bended against an observer will appear dark whereas the grass which is folded/bended away from an observer will appear bright. Thus, if the pattern comprises stripes, and the stripes are followed by a lawn maintenance vehicle in alternating directions, the generated pattern in the lawn will appear as stripes of alternating brightness (bright, dark, bright, dark, etc.). A skilled person will readily appreciate that any type of pattern can be generated. The pattern may be a computer-readable pattern.

By the term "zone" is understood any region, area or section of the lawn on which a patterned effect is desired. For example, if the pattern to be generated comprises stripes of alternating apparent contrast, the individual stripes/rectangles may be considered as zones. If for example, the pattern to be generated is a checkered pattern, the individual squares of the pattern may be considered as zones.

By the term "overlap" is understood a spatial overlap. The first overlap is a spatial overlap between adjacent vehicle path sections that are in the same direction (i.e., the lawn maintenance vehicle is intended to manoeuvre along these sections in substantially the same spatial direction). The first overlap may be understood as any width of the overlapping region between the vehicle path sections, such as a minimum width of the spatial overlap, a maximum width of the spatial overlap, or an average width of the spatial overlap, as measured in a direction perpendicular to the direction of the vehicle path sections. The second overlap is a spatial overlap between a vehicle path section in one zone and a neighbouring zone. The second overlap may be understood as any width of the overlapping region between the vehicle path in one zone and the neighbouring zone, such as a minimum width of the spatial overlap, a maximum width of the spatial overlap, or an average width of the spatial overlap, as measured in a direction perpendicular to the direction of the vehicle path section. A difference in overlaps may therefore be regarded as a difference in widths of the first and second overlap as measured in a direction perpendicular to the maintenance paths at a specific point along the paths.

By calculating maintenance paths is understood the process of calculating positions of the maintenance paths on the lawn. As such the visually discernible pattern merely specifies an intended design/layout of the final processed lawn but does necessarily specify details of how to obtain the pattern. Likewise, the digital representation of the lawn merely specifies details regarding the lawn itself and may not specify any patterning or intended use of the lawn. Therefore, the maintenance paths are not given per se, and a calculation is needed in order to determine how to obtain the specific visually discernible pattern for that specific lawn, and possibly also under constraints imposed by a user, such as a constraint concerning the size of the second overlap. The calculated maintenance paths may comprise spatial coordinates, for example GPS coordinates of starting points and end points of the maintenance paths in the case of simple straight paths, and for example a plurality of GPS coordinates for each maintenance path.

According to an embodiment said second overlap is smaller than said first overlap.

The second overlap may be smaller than the first overlap. This is particularly advantageous in situations where the first overlap is large as compared to the size of the errors in guiding and/or controlling the lawn maintenance tool. In these situations, it is advantageous that the second overlap can be made as small as possible such that the errors in guiding and/or controlling the lawn maintenance tool are just compensated and as little as possible damage to the pattern of the neighbouring zone is inflicted.

According to an embodiment said second overlap is user selectable.

The second overlap may be user-selectable meaning that a user can define the size of the desired spatial overlap between a vehicle path section in one zone and a neighbouring zone. This overlap should be as small as possible, ideally non-existing, such that the transitions from one zone to another zone appear as sharp as possible to an observer of the lawn. However, in practice, such small overlaps may be difficult to achieve for at least two reasons.

First, no lawn maintenance vehicle is perfect with respect to maintaining a specific driving direction, and the vehicle may deviate from its intended path due to e.g., mechanical reasons or external reasons such as uneven lawn surfaces or differences in traction of driven wheels of the vehicle due to different lawn surface compositions. The ability of the lawn maintenance vehicle to maintain a desired direction when driving greatly depends on the type of the lawn maintenance vehicle, its size, wheel geometries, control and/or steering mechanisms of the lawn maintenance vehicle.

Second, the determination of the position of the lawn maintenance vehicle may also be susceptible to errors. Clearly, the greater the error in determining positions of the lawn maintenance vehicle, the greater the risk of the lawn maintenance vehicle manoeuvring wrongly on the lawn causing visible errors to the visibly discernible pattern generated in the lawn.

Letting the second overlap being user selectable is advantageous in that it becomes possible for a user of the lawn maintenance vehicle, to define the acceptable size of the partial overlap based on the lawn maintenance vehicle being used and e.g., also the positioning system being used. Thereby, the smallest overlap may always be defined irrespective of the equipment being used.

Preferably, the second overlap is user selectable in the range from 0 centimetres to 30 centimetres, such as from 1 centimetre to 10 centimetres, such as from 2 centimetres to 5 centimetres, and for example the second overlap is chosen to be 2 centimetres.

According to an embodiment said first maintenance path and said second maintenance paths are arranged along said first lawn maintenance direction.

The first and second maintenance paths may be arranged along the first maintenance direction. This means that the travelling direction of the lawn maintenance tool along these paths are coinciding with the first lawn maintenance direction. Likewise, other maintenance paths of other zones, such as the second zone, may have different travelling directions of the lawn maintenance vehicle.

According to an embodiment three or more maintenance paths are arranged in said first zone.

The method may include manoeuvring the lawn maintenance vehicle such that the lawn maintenance tool travels along a plurality of maintenance paths comprising three maintenance paths (including the first and second maintenance path) arranged in the first zone. That is, it may take three runs of the lawn maintenance vehicle to complete the visually discernible pattern in the first zone. Using more maintenance paths (there or more) to complete a zone is advantageous in that extra wide zones may be processed irrespective of the size of the working width of the lawn maintenance tool.

According to an embodiment said step of manoeuvring comprises manoeuvring said lawn maintenance vehicle such that said lawn maintenance tool travels along a route, said route comprising said plurality of maintenance paths, and wherein said route is calculated using said computer processing arrangement.

A pattern for the entire lawn is first completed when the lawn maintenance tool has traversed (travelled along) all of the plurality of maintenance paths. As the plurality of maintenance paths are arranged across zones having different lawn maintenance directions, e.g., a first and a second lawn maintenance direction, it is necessary for the lawn maintenance vehicle to perform turns in between subsequent maintenance paths, for example turns at an end of the pattern. In effect these turns also forms part of the route travelled by the lawn maintenance vehicle (and lawn maintenance tool thereof). If the lawn maintenance vehicle is operated by a driver, the driver may choose the sequence of the maintenance paths to follow by the lawn maintenance tool, and therefore, the route may thus be chosen by the driver according to the driver's preference. However, in cases where the lawn maintenance vehicle is a robotic (or self-driven) vehicle, the entire route to be followed by the lawn maintenance tool of the vehicle may be pre-calculated by the computer processing arrangement. This calculation may further include calculating the turns to be made between subsequent maintenance paths. Calculating the entire route to be followed by the lawn maintenance tool of the lawn maintenance vehicle is advantageous in that an optimal route with respect to time may be calculated. Thereby the lawn maintenance vehicle can generate the pattern in the lawn using the least time. Furthermore, calculating the entire route is advantageous in that constraints can be taken into account, which constraints a driver would not in practice be able to consider given that a least-time consuming route is to be followed. Such constraints may include avoiding sharp turns between subsequent maintenance paths.

According to an embodiment said step of manoeuvring comprises manoeuvring said lawn maintenance vehicle such that two or more subsequent maintenance paths along a route comprising said plurality of maintenance paths are separated by a plurality of other maintenance paths of said plurality of maintenance paths.

When generating a visibly discernible pattern in a lawn using a lawn maintenance vehicle, it is necessary to manoeuvre the vehicle in different directions, such as opposite directions, and therefore it is necessary that the vehicle can perform a turn when manoeuvring about. There is always a risk of causing damage to the lawn when making such turns, and in particular the sharper a turn is the higher the risk is that damage is caused to the lawn. For some sport events there are strict criteria to groundsmen or greenkeepers that the lawn is maintained with only minimal damage incurred by turning of the lawn maintenance vehicle. Therefore, it is advantageous when the lawn maintenance vehicle "skips" maintenance paths when returning in a different direction such that a plurality of other maintenance paths are present in between an outbound maintenance path and a returning maintenance path. Thereby, minimal damage may be caused to the lawn during the step of manoeuvring the lawn maintenance vehicle.

According to an embodiment said step of manoeuvring said lawn maintenance vehicle comprises manoeuvring said lawn maintenance vehicle on the basis of input provided by a guidance system.

By the term "guidance system" is understood any system capable of providing input relating to a global/relative position of the lawn maintenance vehicle (or the lawn maintenance tool thereof). Such a guidance system may be an onboard system of the lawn maintenance vehicle, external to the lawn maintenance vehicle, such as fixed in proximity to the lawn, and even a system comprising system components that are onboard the lawn maintenance vehicle and system components that are external to the lawn maintenance vehicle. The guidance system may be based on various technologies and may be selected from at least GPS-based systems, radar-based systems, laser-based systems, and cellular-based systems. A skilled person readily appreciates that a number of technologies are available and will choose a given technology for the specific purpose.

According to an embodiment said guidance system is based on real-time kinematic positioning.

In a preferred embodiment, the guidance system is based on Real-time kinematic positioning () which is a technique that uses carrier-based ranging and provides ranges (and therefore position) that are orders of magnitude more precise than those available through code-based positioning. By using RTK it is possible to achieve high position accuracy, such as centimetre-level positioning, and therefore, by use of RTK, it is possible to determine a position of the lawn maintenance vehicle with an accuracy of less than 10 centimetres, and in most cases with an accuracy of about 2 centimetres.

In an alternative embodiment of the invention, the guidance system comprises laser guiding, in which lasers are used to shine laser light across the lawn, and a laser detector arranged on the lawn maintenance vehicle (or arranged on the lawn maintenance tool thereof), is configured to detect whether the lawn maintenance vehicle (or lawn maintenance tool thereof) is manoeuvring according to the laser light.

According to an embodiment said step of manoeuvring said lawn maintenance vehicle comprises engaging said lawn maintenance tool when said lawn maintenance tool is travelling along said plurality of maintenance paths and disengaging said lawn maintenance tool when said lawn maintenance vehicle is manoeuvring in between said plurality of maintenance paths.

By engaging the lawn maintenance tool is understood activating the tool such that it performs a maintenance operation. This may for example include driving a cutter such that the lawn is mowed and lowering a roller, a brush, a cultivator etc., such that the tool is in contact with the lawn. By disengaging the lawn maintenance tool is understood the opposite action, i.e., terminating the maintenance operation, for example by stopping a cutter such that the lawn is no longer mowed or lifting the roller, brush, cultivator, etc., such that the tool is no longer in contact with the lawn.

Thereby is provided an advantageous embodiment where the lawn maintenance tool is only used where necessary to generate the pattern in the lawn. At areas of the lawn, outside of the area in which the pattern is to be generated, for example at areas in which the lawn maintenance vehicle performs turns between maintenance paths, there may not be a need of maintaining the lawn, and therefore by disengaging the lawn maintenance tool in this area the lawn maintenance operation is only performed at relevant places along the total route traversed by the lawn maintenance vehicle, and thereby is achieved a more energy efficient method of generating a visibly discernible pattern in a lawn.

According to an embodiment said engaging lawn maintenance tool and said disengaging said lawn maintenance tool is carried out automatically.

The steps of engaging and disengaging the lawn maintenance tool may be carried out automatically. This may be carried out by identifying a position of the lawn maintenance tool (e.g., using a guidance system such as RTK) with respect to the individual maintenance paths to identify whether the lawn maintenance tool is positioned on the maintenance path or outside the maintenance path (e.g., on a part of the lawn where the visually discernible pattern is not to be generated). Furthermore, the automatic engaging/disengaging may be based on the orientation of the lawn maintenance vehicle with respect to the maintenance direction of the zone in which the respective maintenance path is arranged, such that the lawn maintenance tool is only engaged when the lawn maintenance vehicle (or tool thereof) is facing in the intended direction.

By performing the engaging/disengaging automatically it may be possible to avoid generation of the pattern in unwanted positions of the lawn. The automatic engaging/disengaging may also be carried when the lawn maintenance vehicle is a robotic vehicle, but also in the case of a lawn maintenance vehicle being operated by a driver, such as a lawn tractor, which is advantageous in that the driver only needs to focus on the manoeuvring of the vehicle. Furthermore, by basing the engaging/disengaging of the lawn maintenance tool on the relative orientation of the lawn maintenance vehicle with the respective maintenance direction associated with a maintenance path, it is ensured that the lawn maintenance tool is only engaged when the lawn maintenance vehicle is driving in the right direction with respect to the maintenance direction of a given zone. Thereby, if the lawn maintenance vehicle erroneously drives in the wrong direction in a given zone, such as if a driver enters a maintenance path from the wrong side of the pattern, or if a robotic vehicle performs a wrong manoeuvring, the lawn is not subjected to a lawn maintenance operation, and the visually discernible pattern is not compromised.

In an alternative embodiment, where the lawn maintenance vehicle is operated by a driver, the driver may be alerted, using e.g., a display present in the vehicle, if the driver is about to enter a maintenance direction in a wrong direction.

According to an embodiment the lawn maintenance vehicle is configured to automatically manoeuvre along said plurality of maintenance paths.

The lawn maintenance vehicle may be configured to automatically manoeuvre along the plurality of maintenance paths. In other words the vehicle may be self-tracking along the paths. This is advantageous in that the size of the second overlap may be reduced.

According to an embodiment said method comprises a step of providing said digital representation of said lawn.

By providing said digital representation is understood the act of making the digital representation of the lawn available to the computer processing arrangement. The digital representation may be made available in a number of ways including a user defining the digital representation by drawing the lawn in a computer program, such as a CAD program (computer aided design program), typing in coordinates of key positions of the lawn (such as corner positions of a football field), or any other way of drawing/typing on a computer. The digital representation may also be made available to the computer processing arrangement by providing an already made digital representation of the lawn, from e.g., a third party. For example, in the case of a football field, a number of lines are marked on the field defining the boundary/edges of the football field, the penalty zones, the center line, the corner areas, etc. It is known to automatically mark such lines using line marking robots, and these robots may operate on the basis of a digital representation of the lawn. That digital representation of a lawn may therefore already exist and be used as a digital representation for the purpose of the present method, by e.g., importing the digital representation in a digital memory accessible to the computer processing arrangement. Providing the digital representation is advantageous in that a user, such as a groundsman or greenkeeper, may actively define the digital representation of the lawn themselves and may for example take into account physical changes (e.g., size and/or design changes) made to the lawn which is not necessarily reflected in pre-made digital representations of the lawn.

According to an embodiment said digital representation is provided in a digital memory.

By the term digital memory is understood any kind of data storage capable of storing digital data. Examples of digital memories include volatile memories such as RAM (Random Access Memory), non-volatile memories such as ROM (Read Only Memory), hard drives, and solid-state drives. The digital memory may be a dedicated memory, such as a single memory device, or it may be a distributed memory, such as distributed across one or more servers, and may even comprise digital cloud storage.

Providing the digital representation in a digital memory is advantageous in that the digital representation may be made available for later uses. For example, the method may be used to prepare a lawn for a football match, and later the same digital representation of the lawn may be used according to the same method for preparing the lawn for an American football match.

According to an embodiment said method comprises a step of providing said pattern to be generated in said lawn.

By providing said pattern is understood the act of making the pattern to be generated in the lawn available to the computer processing arrangement. The pattern may be provided in a number of ways including a user defining the pattern, such as by drawing the pattern, typing coordinates of the pattern, selecting among a number of pre-defined patterns, re-scaling a pre-defined pattern to fit the digital representation of the lawn, or any combination of these. The pattern may be provided in a digital memory, such as the digital memory in which the digital representation of the lawn is stored.

Providing the pattern to be generated is advantageous in that a user, such as a groundsman or greenkeeper, may actively choose/define the pattern to be used.

According to an embodiment said pattern to be generated in said lawn is provided via a user interface of an electronic device.

The step of providing the pattern to be generated in the lawn may comprise providing the pattern via a user interface of an electronic device. By a "user interface" is understood a point of human-computer interaction and communication. This can include display screens, keyboards, a mouse and the appearance of a desktop. In general the user interface is an electronic interface capable of receiving input by a user, such as a graphical user interface, touch user interface, or a voice user interface. The user interface is arranged in an electronic device, such as a personal computer, a laptop, a tablet, a smartphone, a smartwatch, or any other kind of electronic device comprising a touch sensitive screen and computer processing means.

The step of providing the pattern may comprise a user selecting a pattern in a user interface. The pattern may be selected among a plurality of pre-defined patterns, such as patterns suitable for football fields, patterns suitable for golf courses, and patterns suitable for American football fields, or other lawn-based sports where patterning is being used. The patterns to be selected amongst may be patterns previously used by the user, or it may be patterns already defined by other users or third parties. Optionally, a user may have to perform a scaling operation of the selected pattern in the user interface such that the selected pattern fits with the lawn to be maintained. For example, a football field may vary in size according to the imposed regulations. According to FIFA (Fédération Internationale de Football Association) regulations the length of a football field should be minimum 90 metres and maximum 120 metres, however, for international football matches the regulations are somewhat stricter, and there the accepted length of a football field is minimum 100 metres and maximum 110 metres. Therefore, it may be necessary to scale the selected pattern accordingly, such that the selected pattern fits the lawn in question. Such scaling operations are advantageously carried out in the user interface.

Selecting a pattern in a user interface is advantageous in that a definition of the pattern to be generated in the lawn can be generated quickly without the need of a groundsman or groundkeeper having to draw up the pattern themselves. Thereby the working efficiency of groundsmen or groundkeepers are greatly improved.

Alternatively, the step of providing the pattern may comprise a user defining the pattern in the user interface, such as by drawing the pattern in the user interface or building the pattern by stitching together pre-defined pattern elements., i.e., geometrical elements.

According to an embodiment said method comprises recording and storing manoeuvres performed by said lawn maintenance vehicle in a digital memory.

The method may comprise recording and storing manoeuvres performed by the lawn maintenance vehicle in a digital memory, such as a digital memory of a lawn maintenance system. More specifically, data relating to the maintenance paths which have actually been traversed by the lawn maintenance tool of the lawn maintenance vehicle is stored in a digital memory. The digital memory may be a local memory, such as a dedicated memory implemented in the lawn maintenance vehicle or a computing device communicatively coupled to the lawn maintenance vehicle, or a distributed memory, such as a cloud-based memory. The digital memory may be communicatively coupled with the computer processing arrangement.

Recording and storing the manoeuvres is advantageous in that a record is established of which maintenance paths that have been traversed by the lawn maintenance tool. Such a record can be used to determine maintenance paths that still remain to receive a maintenance operation by the lawn maintenance tool. This is particularly advantageous in cases where the lawn maintenance vehicle is operated by a driver. In such situations it may be difficult for the driver/user to keep track of which maintenance paths that have been traversed and which maintenance paths are still missing for the pattern to be completed. This is particularly difficult in situations where the driver skips maintenance paths, for example, to avoid sharp turns of the lawn maintenance vehicle. By recording and storing the traversed maintenance paths it is possible provide the driver/user of information of which maintenance paths that are missing. Thereby is provided a more robust method of generating a visibly discerning pattern in a lawn.

According to an embodiment said lawn maintenance vehicle is operated by a driver, and wherein said method comprises conveying driving instructions to said driver of said lawn maintenance vehicle, said driving instructions being based on said calculated plurality of maintenance paths.

The lawn maintenance vehicle may be a vehicle operated by a driver, and in such a situation driving instructions may be conveyed to the driver, which driving instructions may be based on the calculated plurality of maintenance paths. The driving instructions may range from full driving instructions instructing the driver to follow a precise route comprising the plurality of maintenance paths, to driving instructions that are mere suggestions to the driver. In any case the driving instructions may assist the driver in such a way that the driver is certain that the lawn maintenance vehicle is propelled in the correct directions along the plurality of maintenance paths such that the intended pattern is generated correctly in the lawn. Thus, conveying the driving instructions to the driver is advantageous in that risks of wrongly executed maintenance paths are reduced.

The driving instructions may be conveyed to the driver in various ways including visual means, such as by use of an electronic display arranged in the lawn maintenance vehicle, by acoustic means, such as by reading aloud the instructions using a loudspeaker arranged in the lawn maintenance vehicle, or by vibration means, such as vibrations in a seat or in control means of the lawn maintenance vehicle. Preferably, the driving instructions are conveyed to the driver by use of an electronic display, for example a display of an electronic device such as a laptop, a tablet, a smartphone, a smartwatch, or any kind of electronic device comprising an electronic display and computer processing means.

According to an embodiment of the invention, said driving instructions may further be based on said recorded and stored manoeuvres performed by said lawn maintenance vehicle.

According to an embodiment said lawn maintenance tool is selected from a lawn mower, a lawn roller, a brush, a cultivator, a planer, a spike roller, one or more wheels, a lawn leveler, a groom, or any combination thereof.

The lawn maintenance tool may be a lawn mower, such as a rotating blade arranged to cut grass by rotating in a plane substantially parallel to a surface of the lawn, or a cylinder mower having a number of blades spiralling about a rotational axis of the cylinder (also known as a reel mower), a lawn roller, a brush, such as a lawn sweeper, a cultivator, a planer, a spike roller, one or more wheels arranged to apply a pressure on the lawn when driving across the lawn (the one or more wheels may form part of the wheels of the lawn maintenance vehicle (and in some cases also constitute the driving wheels of the lawn maintenance vehicle), a groom, or any combination of the above listed. The lawn maintenance tool may be arranged to cut the lawn, fold/bend constituents of the lawn in a specific direction, affect a direction of growth (in cases of a lawn comprising natural grass), or modify the soil beneath the lawn in such a way that a change of direction of the constituents of the lawn is caused.

According to an embodiment said first zone comprises a zone width, wherein said lawn maintenance tool comprises a working width, and wherein said working width is narrower than said zone width.

By a "zone width" may be understood any width of the zone as measured perpendicularly to a direction of a maintenance path arranged in said zone, for example a minimum width, or an average width. By a "working width" may be understood a width along which the lawn maintenance tool is configured to perform a maintenance operation to the lawn. The working width may denote the width of a single lawn maintenance tool, such as a single mower, brush, roller, etc., however in case of multiple maintenance tools, such as multiple mowers, brushes, rollers, etc., the term working width may denote a combined width along which the multiple tools are configured to perform maintenance operations to the lawn.

For example, if the lawn maintenance vehicle is configured to mow the lawn and has a cutting width of e.g., 2.2 metres, then the working width may be 2.2 metres. This is irrespective of whether the cutting width is achieved using a single cutter/mower, or if the cutting width is achieved using a plurality of cutters/mowers. Likewise, if the lawn maintenance vehicle is configured to roll the lawn with a roller that is 2 metres wide, then the working width may be 2 metres. It should also be noted that by cutting width is understood a width which is cut/mowed in the lawn when the cutting/mowing device is passed along the lawn. For example, if the mowing device of the lawn maintenance device is a rotating blade arranged to cut grass by rotating in a plane substantially parallel to a surface of the lawn, the cutting width may be the diameter of the circle swept out by the blade as it rotates about its axis of rotation. Also, for example, if the mowing device (or mowing devices) of the lawn maintenance vehicle are cylinder lawn mowers, the cutting width may be the width of an individual cylinder, or in the case of a plurality of cylinders, the combined width of the cylinders.

The working width may be narrower than the zone width of the first zone. This is advantageous in that there is room for the lawn maintenance vehicle initiating a turn before an end of a zone without the vehicle having to drive over a neighbouring zone where the lawn is mowed and/or rolled in a different direction. This is particularly advantageous in situations where there is a lack of space for turning the vehicle outside the zone, Thereby, an already generated pattern in the neighbouring zone can be preserved.

According to an embodiment said lawn maintenance tool comprises a working width in the range from 1 meter to 5 meters.

According to an embodiment, each zone of said first zone and said second zone is associated with a constraint defining an allowable maintenance direction.

The first zone and the second zone of the plurality of zones of the pattern may each be associated with a constraint defining an allowable maintenance direction. By such a constraint may be understood that the lawn maintenance vehicle may only proceed along the maintenance direction allowed by the constraint, whereby all maintenance paths arranged in the zone in question should have the same maintenance direction. The association of the constraint to the first zone and the second zone may be performed in the calculation of the plurality of maintenance paths by the computer processing arrangement, or the association of the constraint may alternatively be performed by the lawn maintenance vehicle passing through the respective zone for the first time.

According to an embodiment, each zone of said plurality of zones is associated with a constraint defining an allowable maintenance direction.

Each zone of the plurality of zones of the pattern may be associated with a constraint defining an allowable maintenance direction.

Associating a zone with a constraint defining an allowable maintenance direction is advantageous in that it may be possible to restrict the lawn maintenance vehicle from traversing the zone in different, such as oppositely pointing maintenance directions, when passing along another maintenance path in the zone.

According to an embodiment, said lawn maintenance vehicle is manoeuvred in such a way that after completion of a first maintenance path arranged in a first zone, said lawn maintenance vehicle enters a second maintenance path arranged in a second zone having a constraint defining an allowable maintenance direction, said allowable maintenance direction being different from a maintenance direction associated with said first zone.

Once the lawn maintenance vehicle has maneuvered along a first maintenance path, in a first maintenance direction, of a first zone of the plurality of zones of the pattern, it may have to complete a second and subsequent maintenance path. Advantageously, the lawn maintenance vehicle follows a second maintenance path in a second zone where that second zone is constrained by a constraint defining an allowable maintenance direction which is different, such as opposite, from the first maintenance direction. Thereby may be achieved that the lawn maintenance vehicle may quickly proceed with the process of generating the visually discernible pattern and making most use out of its movement at the lawn, without compromising the visual appearance of the pattern being generated (ensured by the lawn maintenance vehicle only proceeding in a lawn maintenance direction matching a constraint of a zone).

According to an embodiment, a direction of movement of said lawn maintenance vehicle through one zone of said plurality of zones defines a lawn maintenance direction as a constraint for said one zone.

As the lawn maintenance vehicle enters a zone for the first time by following a maintenance through the zone, that movement may define the maintenance direction for the zone as a constraint to be met. This may be understood in that subsequent maintenance paths through the zone will also have to be according to this constraint. Defining an allowable maintenance direction in this way is advantageous in that it may be possible to restrict the lawn maintenance vehicle from traversing the zone in different, such as oppositely pointing maintenance directions, when passing along another maintenance path in the zone.

The working width of the lawn maintenance tool may be in the range from 1 meter to 5 meters, such as in the range from 2 meters to 4 meters, such as in the range of 2.5 meters to 3.5 meters, for example 2.75 meters. The working width of the lawn maintenance tool may be substantially greater than the working width of typical household lawn mowers which typically have a cutting width of the order of a few tens of centimetres, for example around 25 centimetres. This increased working width is advantageous given that the zones of patterns generated in lawns for sport events, such as football, typically have a width in the order of meters. For example, in the case of an 11-man football field there may be 5.5 metres from the goal line to the front of the goal box, a further 5.5 metres to the penalty spot, and a further 5.5 metres to the front of the penalty box. In such a case, the zones of the pattern may conveniently be 5.5 metres to conform with the line spacing of the field. Clearly, when having such wide zones, it is advantageous that the working width of the lawn maintenance tool is of a similar order of size, as the total number of maintenance paths required to complete the pattern is lower compared to the case of a lawn maintenance tool having a shorter working width.

Another aspect of the invention relates to a lawn maintenance system for generating a visually discernible pattern in a lawn, said lawn maintenance system comprising:
a lawn maintenance vehicle comprising a lawn maintenance tool for performing a maintenance operation to a lawn, and
a computer processing arrangement,
wherein, said lawn maintenance system is configured to calculate, using said computer processing arrangement, a plurality of maintenance paths to be followed by said lawn maintenance tool including a first maintenance path and a second maintenance path arranged in a first zone of a pattern to be generated in said lawn, wherein said calculation is based on a digital representation of said lawn and said pattern, said pattern comprising a plurality of zones including said first zone having a first lawn maintenance direction and a second zone having a second lawn maintenance direction different from said first lawn maintenance direction, wherein said first and second maintenance paths are arranged in said first zone such that a first overlap is formed between said first and second maintenance paths, wherein one of said first and second maintenance paths is arranged such that a second overlap is formed between said one maintenance path and said second zone, wherein said first overlap is different from said second overlap.

Thereby is provided an advantageous system for generating a visually discernible pattern in a lawn. The system facilitates that a lawn maintenance vehicle of the system may manoeuvre across the lawn such that a lawn maintenance tool thereof follows calculated maintenance paths, whereby the lawn maintenance vehicle may generate the desired visually discernible pattern in the lawn. The system is advantageous for the same reasons described in relation to the method for generating a visually discernible pattern in a lawn.

According to an embodiment said lawn maintenance vehicle comprises at least one motor for maneuvering said lawn maintenance vehicle on said lawn.

According to an embodiment said lawn maintenance system comprises a guidance system.

The lawn maintenance system may comprise a guidance system as described in relation to the method. The guidance system may comprise system components onboard the lawn maintenance vehicle, system components external to the lawn maintenance vehicle, for example fixed in position in proximity of the lawn, or a mixture of onboard system components and externally placed system components. In a preferred embodiment the guidance system is based on RTK.

According to an embodiment said lawn maintenance system comprises a digital memory.

The lawn maintenance system may comprise a digital memory. The digital memory may be used for storing recordings of manoeuvres performed by said lawn maintenance vehicle, one or more digital representations of one or more lawns, and one or more patterns to be generated in a lawn.

According to an embodiment said computer processing arrangement is at least partly arranged in said lawn maintenance vehicle.

The computer processing arrangement may at least partly be arranged in said lawn maintenance vehicle, such as fully arranged in said lawn maintenance vehicle. Hereby is understood that the computer processing arrangement, or a part thereof (such as one of several computer processors of a distributed computing system, is carried by the lawn maintenance vehicle. The computer processing arrangement (or part(s) thereof) may be an integral component of the lawn maintenance vehicle or simply carried by the lawn maintenance vehicle. For example, the computer processing arrangement (or part(s) thereof) may be arranged in an electronic device carried by the lawn maintenance vehicle, such as a personal computer, a laptop, a tablet, a smartphone, a smartwatch, or any other kind of electronic device comprising a computer processor.

According to an embodiment said lawn maintenance vehicle is configured to automatically manoeuvre according to a route comprising said plurality of maintenance paths, wherein said route is calculated using said computer processing arrangement.

The lawn maintenance vehicle may be configured to automatically manoeuvre according to a route comprising said plurality of maintenance paths, wherein said route is calculated using said computer processing arrangement. Such a lawn maintenance vehicle may also be referred to as a robot or self-driving vehicle.

According to an embodiment said lawn maintenance vehicle is configured to automatically manoeuvre on the basis of input provided by a guidance system.

The lawn maintenance vehicle may be configured to automatically manoeuvre on the basis of input provided by a guidance system.

According to an embodiment said lawn maintenance vehicle is configured to be operated by a driver, and wherein said lawn maintenance system is configured to convey driving instructions to said driver, said driving instructions being based on said calculated plurality of maintenance paths.

The driving instructions may be conveyed to the driver in a visual way, such as by use of a display, or in an auditory way, such as by use of a speaker, a headset or by a piece of headphones.

According to an embodiment said lawn maintenance system comprises a display, and wherein said lawn maintenance system is configured to convey said driving instructions using comprises a display for displaying driving instructions to a driver of said lawn maintenance vehicle.

According to an embodiment said computer processing arrangement and said display are retrofitted to said lawn maintenance vehicle.

The computer processing arrangement and display may be retrofitted to an already existing lawn maintenance vehicle. This is advantageous in that the already existing lawn maintenance vehicle may be improved as it may carry out methods according to embodiments disclosed herein.

According to an embodiment said computer processing arrangement is at least partly cloud-based.

In an embodiment of the invention, the lawn maintenance system is configured to carry out a method as disclosed in any of the above provisions.

Another aspect of the invention relates to a computer program comprising instructions which, when the program is executed by a computer, cause the computer to carry out the steps of:
- providing a digital representation of a lawn,
- providing a pattern to be generated in said lawn, said pattern comprising a plurality of zones including a first zone and a second zone,
- calculating a vehicle path to be followed by a lawn maintenance vehicle on said lawn on the basis of said digital representation and said pattern, wherein said vehicle path comprises at least two vehicle path sections in said first zone extending in a same direction, wherein said at least two vehicle paths are arranged such that a first partial overlap is formed between said two vehicle path sections, wherein at least one vehicle path section of said at least two vehicle path sections in said first zone is arranged such that a second partial overlap is formed in between said at least one vehicle path section and said second zone and, said second partial overlap being smaller than said first partial overlap, and
- generating and outputting driving signals for a lawn maintenance vehicle on the basis of said vehicle path for the purpose of generating a visually discernible pattern in said lawn.

According to an embodiment said computer is a computer processing arrangement of a lawn maintenance vehicle.

According to an embodiment said outputted driving signals are for driving one or more motors of a lawn maintenance vehicle.

The computer program may be executed by a computer, such as a computer processing arrangement of a lawn maintenance vehicle, such that driving signals are outputted by the computer. These driving signals are signals to be transmitted from the computer to one or more motors of a lawn maintenance vehicle. Thereby, the driving signals are used directly for manoeuvring the lawn maintenance vehicle, and since the driving signals are generated and outputted on the basis of the calculated vehicle path, the lawn maintenance vehicle generates the visually discernible pattern in the lawn when manoeuvring about on the lawn.

Outputting driving signals for one or more motors of a lawn maintenance vehicle is particularly advantageous when the lawn maintenance vehicle is implemented as a self-driving vehicle (i.e., as a driverless vehicle or robot). Thereby, a fully autonomous lawn maintenance vehicle is realized, which vehicle may be capable of generating a visually discernible pattern in a lawn in an advantageous way.

According to an embodiment said outputted driving signals are for being displayed on a display of a lawn maintenance vehicle.

The computer program may be executed by a computer, such as a computer processing arrangement of a lawn maintenance vehicle, such that driving signals are outputted by the computer. These driving signals are signals to be transmitted and displayed on a display of a lawn maintenance vehicle as driving instructions. Thereby, a driver of the lawn maintenance vehicle, such as a groundsman or a greenkeeper, can operate/manoeuvre the lawn maintenance vehicle according to the displayed driving signals/instructions, whereby a visibly discernible pattern is generated in the lawn in an advantageous way.

According to an embodiment said step of generating and outputting driving signals for a lawn maintenance vehicle is further carried out on the basis of position input provided by a positioning system.

The computer program may further be configured to consider input regarding position, as provided by a position system, when generating driving signals for a lawn maintenance vehicle. Generating and outputting driving signals on the basis of position input provided by a positioning system is advantageous in that a high accuracy of the generation of a visibly discernible pattern may be achieved using a lawn maintenance vehicle.

According to an embodiment of the invention, said computer program comprises instructions which, when the program is executed by a computer, cause the computer to carry out the steps of the method according to any of the above provision.

According to an embodiment of the invention, when the computer program is carried out using a lawn maintenance system according to any of the above provisions, any method disclosed in the above provisions may be carried out.

### The drawings

Various embodiments of the invention will in the following be described with reference to the drawings where
fig. 1 illustrates an example of lawn for a football field useful for understanding the present invention,
fig. 2 illustrates a more detailed top-down vie of the lawn of fig. 1 where a visually discernible pattern is seen, the figure being useful for understanding the present invention,
figs. 3-4 illustrate a visually discernible patterns useful for understanding the present invention,
fig. 5 illustrates a method for generating a visually discernible pattern in a lawn according to an embodiment of the present invention,
fig. 6 illustrates a method for generating a visually discernible pattern in a lawn according to an embodiment of the present invention,
fig. 7 illustrates an entire route to be followed by a lawn maintenance vehicle to generate a visually discernible pattern in a lawn according to an embodiment of the present invention,
fig. 8 illustrates a user interface for applying a visually discernible pattern to a digital representation of a lawn according to an embodiment of the invention,
figs. 9-10 illustrate steps of methods according to embodiments of the present invention,
fig. 11 illustrates a lawn maintenance system according to an embodiment of the invention, and
fig. 12 illustrates a method of generating a visually discernible pattern in a lawn according to another embodiment of the invention.

### Detailed description

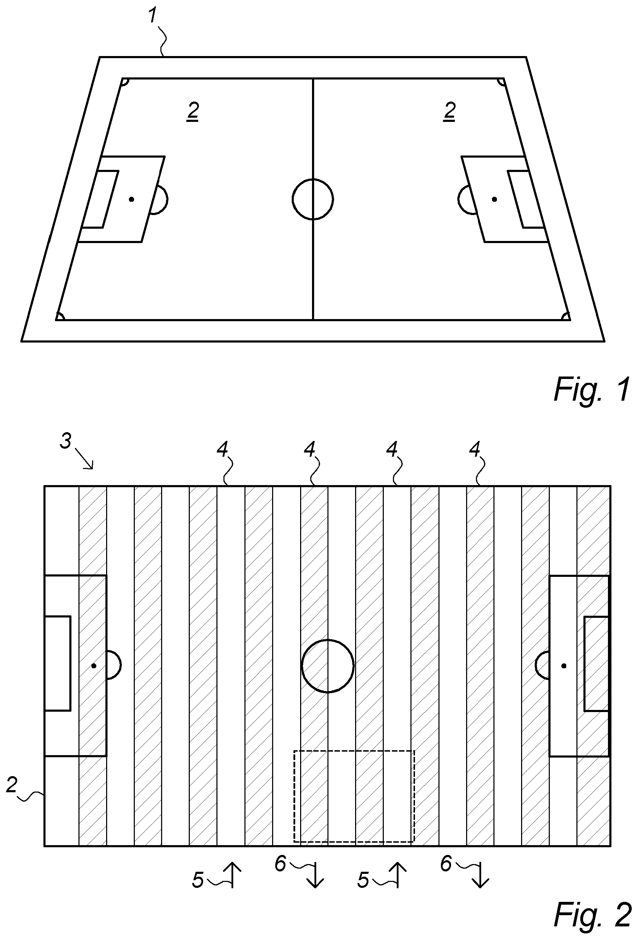

Fig. 1 illustrates a football field for use in football. The football field comprises a number of lines representing critical positions for playing football thereon. These lines include side lines and goal lines which together defines a playing area 2, a centerline dividing the playing area 2 in two, corner lines, etc. The lines are disposed on top of a lawn 1, which in the context of football is also referred to as a turf. For the purpose of the present example, the lawn 1 is made of natural grass, although other types of lawns may be used. These other types of lawns include artificial lawns which is a surface of synthetic fibers made to look like natural grass, and hybrid lawns which is a type of lawn comprising hybrid grass. Hybrid grass (or reinforced natural grass) is a product created by combining natural lawn grass with reinforcing synthetic fibers a mixture of natural grass and synthetic fibers. The synthetic fibers incorporated into the rootzone make the grass stronger and more resistant to damage. The lawn 1 used for the depicted football field is typically arranged at a stadium where spectators may be seated and watch the game unfold. The lawn 1 may be used for other types of sports, such as American football, which naturally require another arrangement of lines in order to fulfill the requirements of the regulation of that sport.

Fig. 2 illustrates a detailed top-down view of the playing area 2 as illustrated in fig. 1. As seen in fig. 2, a pattern 3 is applied to the lawn 1 in the playing area 2. The pattern 3 comprises a plurality of zones 4 arranged in a striped configuration across the lawn 1. The zones 4 shown in fig. 2 comes in two types such that they are visually discernible from each other to a person present at the lawn 1, or visible to a person watching a broadcast of the match being played on the lawn 1, as illustrated by the use of the hatching of every second zone 4. It should be noted that the use of the hatching of zones does not imply that the zones would appear hatched to a person, however, the hatching is only used for illustrative purposes such that a reader is able to distinguish neighboring zones from each other. The zones would be visually discernible from each other as they would appear different in brightness to an observer. Together, the plurality of zones 4 emerges as the pattern 3 which is also visually discernible to an observer. For this reason, the pattern is also referred to as a visually discernible pattern, and the two terms are used interchangeably in the following.

The reasons for this apparent difference in brightness is described in the following. The zones 4 that are non-hatched are associated with a first maintenance direction 5, and the zones 4 that are hatched are associated with a second maintenance direction 6. A maintenance direction denotes a direction along which a lawn maintenance tool 9 (not shown in the figure) has moved across the lawn 1 in a zone 4 in order to generate the visual effect characterized by the visually discernible pattern 3. For the purpose of this example, the lawn maintenance tool 9 is a lawn mower, however, other types of lawn maintenance tools are also able to generate similar visual effects. As the lawn maintenance tool 9 moves across the lawn it affect the lawn in such a way that straws of the lawn are folded (or bended) in the direction of movement of the lawn maintenance tool 9. Thus, the straws of the lawn 1 contained in neighboring zones 4 of the visually discernible pattern are folded/bended in opposite directions as is clear from the arrows on fig. 2 representing the first maintenance direction 5 and the second maintenance direction 6. An observer who is present in the proximity of the lawn, or an observer who is watching the match through a television (or an equivalent device) showing images obtained by a camera present in the proximity of the lawn 1, will see the straws folded away from the observer/camera as brighter than the straws folded towards the observer/camera. This phenomenon is well known and is due to different reflections of light (sun light or lighting provided by lights at the lawn).

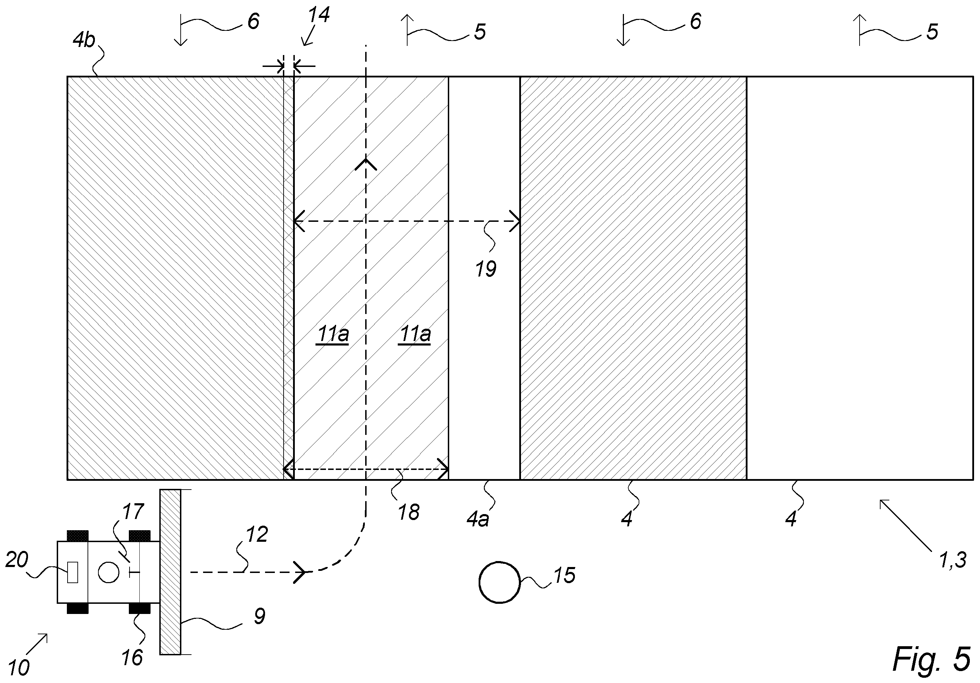

It should be noted that a section of the lawn 1 and pattern 3 (see dashed section of fig. 2) is shown in further detail on fig. 5 which discloses a method according to an embodiment of the invention.

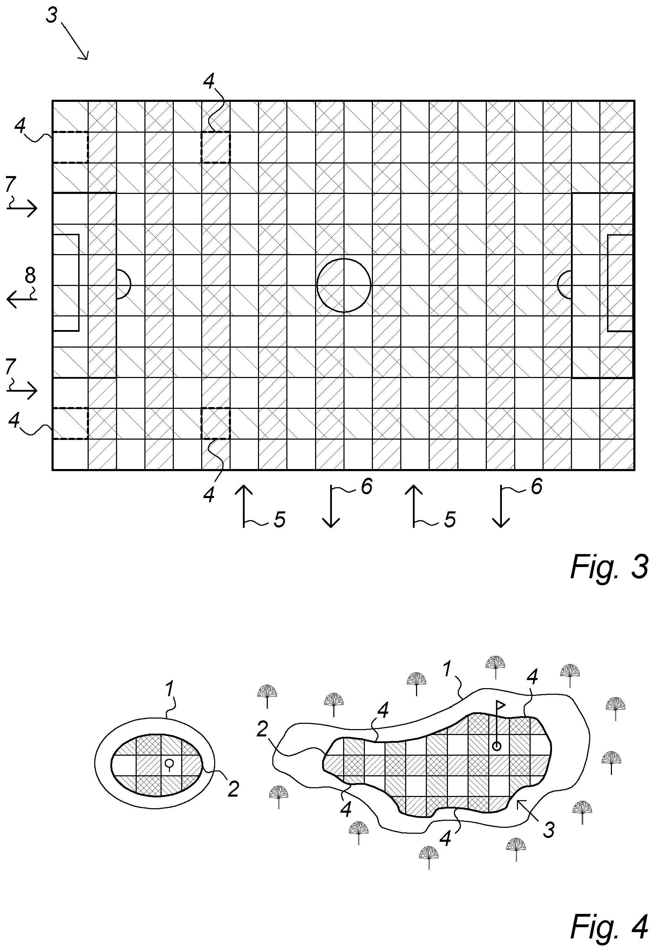

Fig. 3 illustrates a visually discernible pattern 3, which is different from the pattern as illustrated in fig. 2. Instead of striped zones, the zones 4 of the pattern 3 are shown arranged in a checkered pattern of squares. The square-shaped zones 4 comes in four types, as shown by the different hatchings used in the figure. Again, the hatchings are only used for illustrative purposes and is not representative of actual patterns discerned by an observer. Like the visually discernible pattern 3 shown in fig. 2, the pattern is generated by moving a lawn maintenance tool 9 (not shown in the figure) across the lawn 1 in multiple directions including a first maintenance direction 5 and a second maintenance direction 6, like in fig. 1, but also a third maintenance direction 7 and a fourth maintenance direction 8, which are perpendicular directions to the first and second maintenance directions.

Fig. 4 illustrates another lawn 1 which is used for golf. The lawn 1 is maintained/processed in such a way that a visually discernible pattern 3 is generated in the playing areas 2 of the lawn. The pattern is reminiscent of the pattern as seen in fig. 3 and also comprises a plurality of zones 4 of various types as illustrated by the different hatchings.

A skilled person will readily appreciate that visually discernible patterns 3 of different designs may be used for various sports. Besides contributing to the visual appearance of a lawns, the generation of a pattern 3 in a lawn also serves a purpose of easier determination of positions of players and balls. For example, in football, the striped pattern may be used to aid a line judge in determination of whether the rules relating to off-side are breached. The visually discernible pattern may also help an observer determining a position of a player on a football field, which would be difficult for an observer placed far away from the player if the pattern 3 is not there.

Fig. 5 illustrates a method according to an embodiment of the invention. The figure shows a section of a lawn 1 and a visually discernible pattern 3 (the full lawn and pattern can be seen in fig. 2). The figure shows a first zone 4a and a second zone 4b of the pattern 3. The first zone 4a has a first maintenance direction 5 which is a direction away from an observer 15 located in proximity of the lawn 1. That is, straws of the lawn 1 are to be folded/bended away from the observer 15 in the first zone 4a. The second zone 4b has a second maintenance direction 6 which is a direction towards the observer 15. That is, straws of the lawn 1 are to be folded/bended towards the observer 15 in the second zone 4b. Furthermore, the figure shows two more zones of alternating maintenance directions to the right of the first maintenance zone. In the present embodiment, the lawn is a natural lawn so the straws referred to are natural grass straws, however, the lawn may be of different types such as artificial or hybrid according to other embodiments of the invention. The first zone is shown as having a zone width 19 (see upper dashed arrows)

Fig. 5 shows a maintenance operation performed using a lawn maintenance vehicle 10 comprising a set of wheels 16. The lawn maintenance vehicle 10 of this embodiment is a human-operated vehicle in the form of a lawn tractor. In other embodiments of the invention, the maintenance operation is carried out using a self-driving vehicle, for example using a robotic lawn mower. The lawn maintenance vehicle 10 comprises a lawn maintenance tool 9 in the form of a lawn mower. The lawn maintenance operation, i.e., the mowing of the grass by the lawn maintenance tool 9, causes the mowed grass to be folded/bended in the direction of movement of the lawn maintenance vehicle 10. In order to generate the visually discernible pattern 3 in the lawn 1, the operator/driver of the lawn maintenance vehicle 10 has to drive along a route 12 such that specific maintenance paths are followed by the lawn maintenance tool 9.

In the embodiment shown in fig. 5, the driver of the lawn maintenance vehicle 10 receives driving instructions from a display 17 arranged in the lawn maintenance vehicle 10, the driving instructions instructing the driver to follow the first maintenance path 11a. The first maintenance path 11a is calculated by a computer processing arrangement, which in this embodiment of the invention forms part of an electronic device (not explicitly shown in the figure) comprising the display 17. In other embodiments of the invention, the calculation of the maintenance path is carried out by a computer processing arrangement not forming part of the electronic device comprising the display 17. The calculation is based on a digital representation of the lawn and a visually discernible pattern provided by the driver selecting the visually discernible pattern 3. The driving instructions are provided on the basis of input from a guidance system 20, which in this embodiment is an RTK (Real-time kinematic position) system. The guidance system determines a position of the lawn maintenance vehicle 10 to an accuracy of a few centimeters. The driving instructions provided on the screen can therefore guide the driver in such a way that the lawn maintenance tool travels along the projected maintenance paths, including the first maintenance path as seen in fig. 1. It is noted that the center of the lawn maintenance vehicle 10 corresponds to the center of the lawn maintenance tool 9 along the route 12, however, in other embodiments of the invention, where the lawn maintenance tool 9 is displaced with respect to the center of the lawn maintenance tool, the driving instructions are factoring in this displacement, and a different route is displayed to the driver.

Fig. 5 shows a first maintenance path 11a to be followed by the lawn maintenance tool 9 as the lawn maintenance vehicle 10 maneuvers across the lawn 1. As seen the first maintenance path 11a is arranged in the first zone 4a, and the direction of the first maintenance path is coinciding with the first maintenance direction 5a. The first maintenance path 11a is seen as having a configuration of a stripe and it is parallelly arranged with respect to the first zone 4a. The figure shows that a width is assigned to the first maintenance path 11a (see lower dashed arrows). This width corresponds to a width of the lawn maintenance tool 9 and is referred to as a working width 18 of the lawn maintenance tool in the following.

As also seen in fig. 5, the first maintenance path 11a is calculated such that an overlap is formed between the first maintenance path 11a and the second zone 4b. This overlap is referred to as the second overlap 14 in the following. The second overlap 14 is seen as measured in a direction parallel with the working width 18, and it has a size of about 2 centimeters. The small second overlap ensures that the edge between the first zone 4a and the second zone 4b appears as sharp as possible, but still the second overlap 14 is wide enough to ensure that the first maintenance path 11a fully covers the first zone 4a in the vicinity of the second zone 4b irrespective of errors in the guidance system and the drivers ability to maneuver the lawn maintenance vehicle 10 in a straight line across the lawn 1.

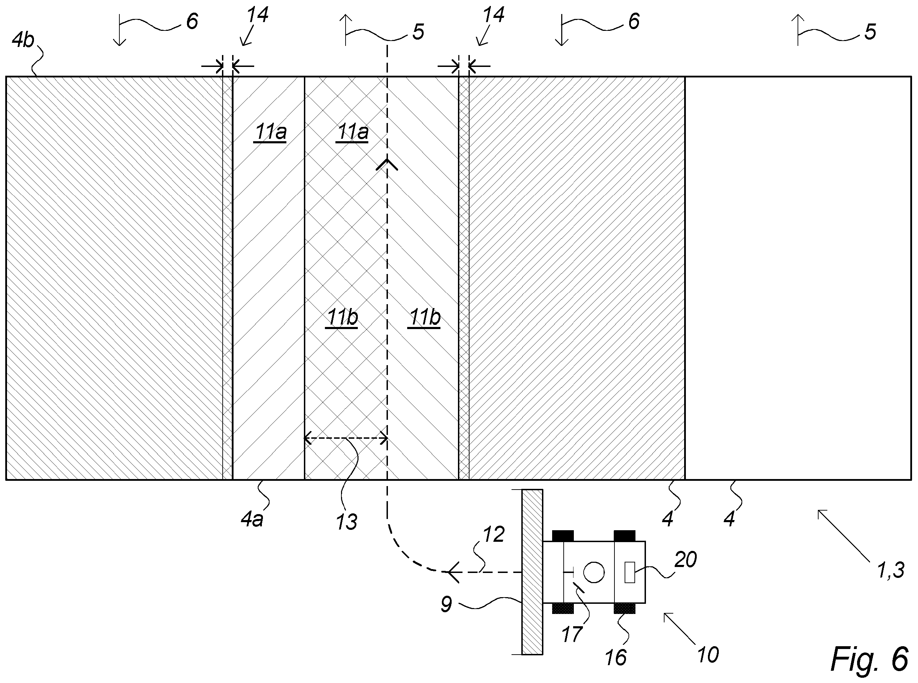

Fig. 6 illustrates a continuation of the maintenance operation depicted in fig. 5. Following the maintenance operation along the first maintenance path 11a (see also fig. 5), the lawn maintenance vehicle 10 is maneuvered across the lawn 1 such that the lawn maintenance tool travels along a second maintenance path 11b along the first maintenance direction.

As seen in fig. 6, the first maintenance path 11a and the second maintenance path 11b are overlapping. The overlap between the two maintenance paths is referred to as the first overlap 13 in the following. As further seen in the figure, another overlap 14 is also formed between the second maintenance path 11b and the adjacent zone 4. As clearly seen in fig. 6, the first overlap 13 is different from the second overlap 14, and in this case, the second overlap 14 is smaller than the first overlap 13. In the present example, it is seen that by moving the maintenance tool 9 along the first maintenance path 11a and the second maintenance path 11b the first zone 4a is fully covered, and the desired visually discernible pattern fully generated in that zone.

It should be noted that figs. 5 and 6 illustrate that the lawn maintenance vehicle travels along a route 12 in such a way that the lawn maintenance vehicle enters the first maintenance path 11a from the left-hand side of the drawings and enters the second maintenance path 11b from the right-hand side of the figures, however this is merely an example, and indeed the lawn maintenance vehicle 10 may enter a maintenance path starting from any of these orientations. For example, when the lawn maintenance vehicle 10 is a driver-operated vehicle (as seen in figs. 5 and 6), the driver may choose in which order the maintenance paths should be taken, whereas for example, when the lawn maintenance vehicle 10 is a self-driving vehicle like a robotic lawn mower, the order of the maintenance paths may already be determined prior to initiating the maintenance operation, as the entire route 12 may be optimized with e.g., respect to a total time of generating the visually discernible pattern 3 in the lawn 1.

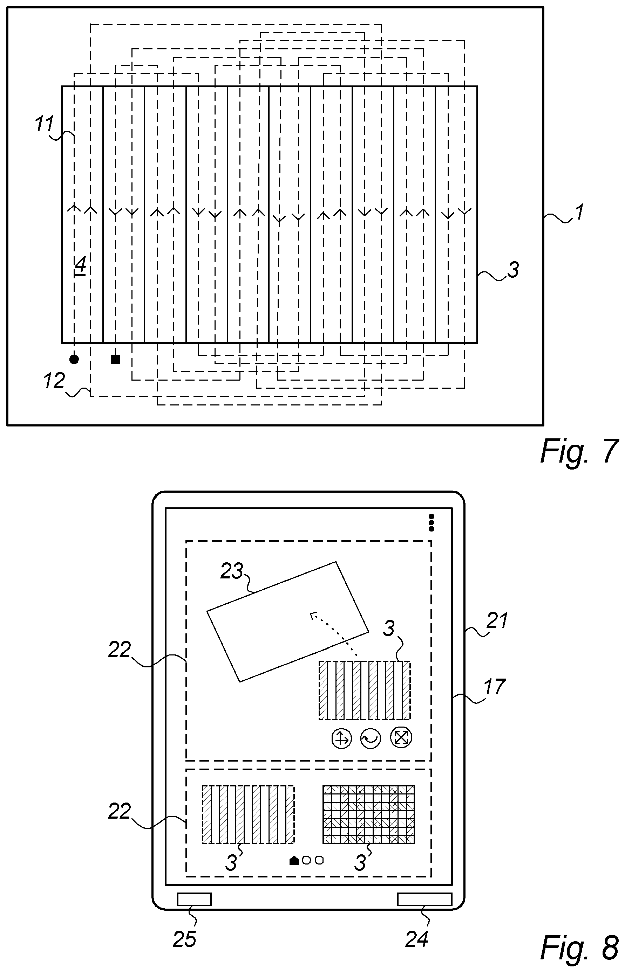

In the present embodiment, since the vehicle is driver operated, and the driver has a free choice of the order in which the plurality of maintenance paths are followed, the display 17 conveys information to the driver of which maintenance paths that have been followed, and which maintenance paths are still missing. In this case, the maneuvers of the lawn maintenance vehicle 10 are recorded and stored in a digital memory (see for example fig. 8), so that it is possible to determine which maintenance paths are missing to complete the process of generating a visually discernible pattern 3 in the lawn 1.

Fig. 7 illustrates an example of a route 12 along which a maintenance vehicle 10 (not shown in the figure) has maneuvered to generate a visually discernible pattern 3 in a lawn 1 according to an embodiment. The route 12 includes a starting point (see filled circle) and an end point (see filled square). As seen, two maintenance paths 11 are used for each zone 4 of the pattern 3, and the pattern has alternating maintenance directions. It is clear from the figure that generation of a visually discernible patter, such as a simple striped pattern 3 as seen in figs. 2, 5, 6 and 7 requires many maintenance paths. Irrespective of whether the maintenance operation is performed with a driver/operator or with a robot, the calculation of these maintenance paths is advantageous. A driver/operator may easily loose oversight of which maintenance paths 11 are still missing if the paths are not calculated and visible on a display 17 (see figs. 5 and 6) and for the case of a robot the calculation of the maintenance paths 11 may further comprise calculation of the entire route 12 (see fig. 7) to be followed by the robot. The calculation of the entire route may further include optimization of the route with respect to e.g., total time of generating the pattern.

Fig. 8 illustrates an electronic device 21 of a lawn maintenance system 27 according to an embodiment. The electronic device 21 of this embodiment is a tablet, however, other types of electronic devices may also be used according to other embodiments of the invention. The electronic device comprises a display 17, like the display 17 shown in figs. 5 and 6. The electronic device 21 may be used by a driver/operator of a lawn maintenance vehicle to calculate maintenance paths 11, and display driving instructions to a driver/operator of a lawn maintenance vehicle (see for example figs. 5 and 6). Alternatively, the electronic device may be used to calculate maintenance paths to be followed by a self-driving vehicle, e.g., a robotic lawn mower. As seen in the figure, the electronic device 21 displays a user interface 22 by use of its display 17, which in this example is a touch-screen display. A user can select a visually discernible pattern 3 from a selection of pre-defined patterns 3 (see lower user interface 22). Once selected, the visually discernible pattern 3 (in this example a striped pattern) is applied to a digital representation of a lawn 23. The digital representation 23 shows the geometry of the physical lawn in which the selected visually discernible pattern is to be generated. The digital representation of the lawn 23 is illustrated to a user by virtue of the user interface 22, however besides the graphical representation of the lawn, the digital representation of the lawn 23 includes data relating to the physical lawn, including GPS-coordinates of parts of the lawn. A user may have to resize the pattern, rotate the pattern, and translate the pattern in order for it to fit within the boundaries of the digital representation of the lawn 23 (see the three circular icons underneath the pattern 3 in the upper user interface 22). Once the pattern is fitted inside the digital representation of the lawn 23, the underlying computer program may calculate the maintenance paths 11 (not shown in figure) required for the visually discernible pattern to be generated in the lawn. In this embodiment of the invention, the calculation of the maintenance paths is carried out using a computer processing arrangement 25 of the electronic device, however, according to other embodiments, the calculation of maintenance paths may be carried out by a computer processing arrangement external to the electronic device 21. For example, the calculation may be delegated to a cloud computing system. As seen in fig. 8, the electronic device 21 comprises a digital memory 25 which may be used for recording and storing maneuvers performed by a lawn maintenance vehicle 10.

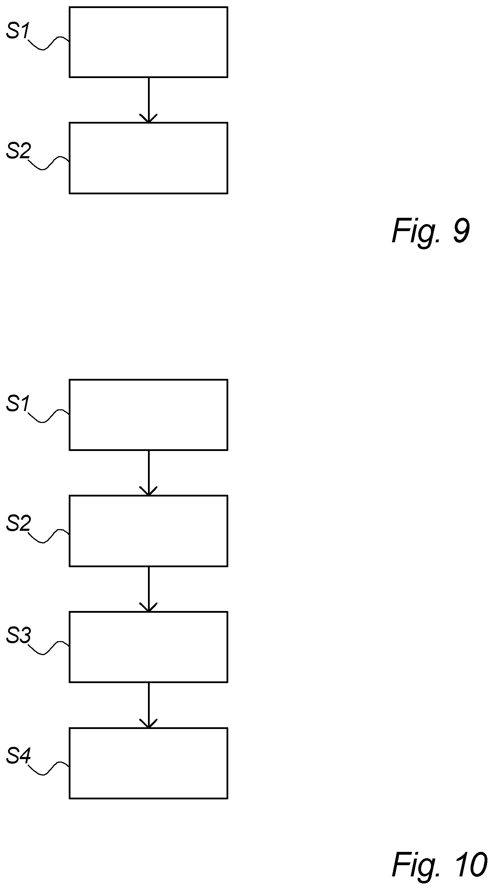

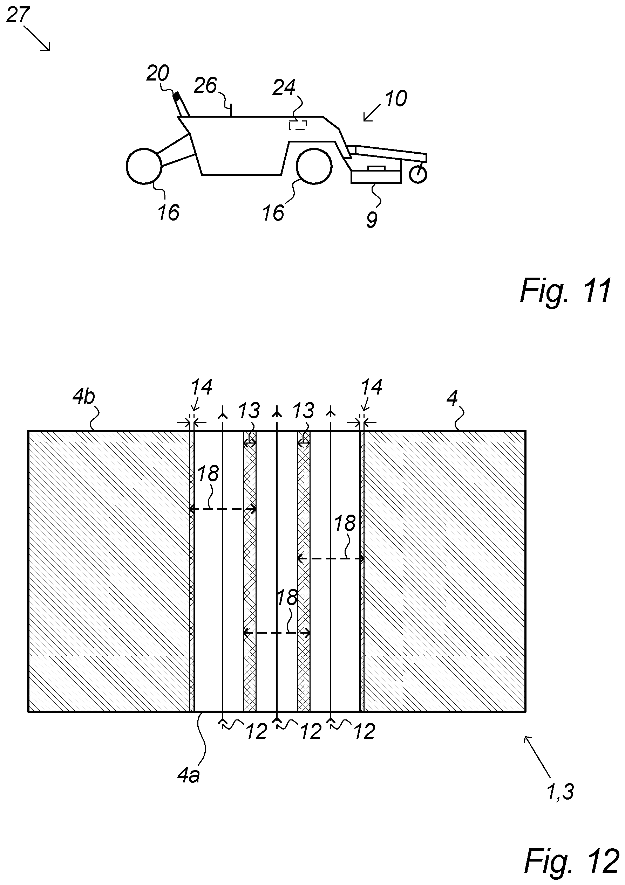

Figs. 9 illustrates steps of a method according to an embodiment. In a first step S1 of the method, a lawn maintenance vehicle 10 is provided on a lawn, and the lawn maintenance tool includes a lawn maintenance tool 9. This lawn maintenance vehicle (and tool) may be the lawn maintenance vehicle 10 shown in figs. 5 and 6, but it may also be a robotic lawn mower as shown in fig. 11.

In a second step S2 of the method, the lawn maintenance vehicle 10 is manoeuvred on the lawn 1 such that the lawn maintenance tool 9 travels along a plurality of maintenance paths 11 including a first maintenance path 11a and a second maintenance path 11b. The plurality of maintenance paths 11 are calculated using a computer processing arrangement (see for example computer processing arrangement 25 in fig. 8), the calculation being based on a digital representation 23 of the lawn 1 and a pattern 3 to be generated in the lawn, the pattern comprising a plurality of zones 4 including a first zone 4a having a first lawn maintenance direction 5 and a second zone 4b having a second lawn maintenance direction 6 different from the first lawn maintenance direction 5, wherein the first and second maintenance paths are arranged in the first zone 4a such that a first overlap 13 is formed between the first and second maintenance paths, wherein one of the first and second maintenance paths is arranged such that a second overlap 14 is formed between the one maintenance path and the second zone 4b, wherein the first overlap 13 is different from the second overlap 14, and wherein the visually discernible pattern 3 is generated in the lawn 1 by the lawn maintenance tool 9 being moved along the plurality of maintenance paths 11.

Fig. 10 illustrates steps of a method according to another embodiment. In a first step S1 of the method, a lawn maintenance vehicle 10 is provided on a lawn, and the lawn maintenance tool includes a lawn maintenance tool 9. This lawn maintenance vehicle (and tool) may be the lawn maintenance vehicle 10 shown in figs. 5 and 6, but it may also be a robotic lawn mower as shown in fig. 11.

In a second step S2, a digital representation 23 of a lawn 1 is provided. In this embodiment, the lawn is provided by a user defining coordinates of the lawn in a user interface 22, such as the user interface 22 seen in relation to fig. 8, however, other ways of providing the digital representation of the lawn may also be used according to other embodiments. These other ways include amongst other providing an already pre-defined digital representation of the lawn.

In a third step S, a visually discernible pattern 3 is provided. In this embodiment, the visually discernible pattern 3 is provided by a user selecting the desired pattern in a user interface 22, as also seen in fig. 8, however, other ways of providing the pattern may also be used according to other embodiments.

The fourth step S4 corresponds to the step S2 shown in fig. 9.

Fig. 11 illustrates a lawn maintenance vehicle 10 according to an embodiment. The lawn maintenance vehicle 10 is a self-driving, i.e., driverless vehicle, and in particular a robotic lawn mower. The lawn maintenance tool 9 of the vehicle 10 is therefore a mower/cutter, however other kind of tools for performing different types of lawn maintenance operations, such as rolling, brushing, and cultivating. The lawn maintenance vehicle 10 of this embodiment is configured to perform any of the steps of the methods disclosed in relation to figs. 9 and 10. As seen, in fig. 11, the vehicle 10 comprises a computer processing arrangement 24 and a guidance system 20. The guidance system 20 is preferably based on RTK. Furthermore, the lawn maintenance vehicle 10 comprises a wireless transceiver for data communication with an electronic device, such as an electronic device 21 shown in fig. 8. Thereby, a user may apply a selected pattern 3 to a digital representation 23 of a lawn in a user interface 22, and therefrom instruct the robotic lawn mower (lawn maintenance vehicle in fig. 11) to perform maintenance operations along maintenance paths. The calculation of the maintenance path may be carried out by the computer processing arrangement 24 in fig. 8 or by the computer processing arrangement in fig. 11, or by a combination of the two.

In addition to showing a lawn maintenance vehicle 10, fig. 11 also illustrates a lawn maintenance system 27. In this context, a lawn maintenance system 27 includes a lawn maintenance vehicle 10 and a computer processing arrangement 24. The computer processing arrangement 24 may form part of the lawn maintenance vehicle 10, as is the case for the embodiment shown in fig. 11, however, the computer processing arrangement may also be external to the lawn maintenance vehicle, as is the case for the embodiment shown in figs. 5 and 6 where the computer processing arrangement is present in an electronic device 21 having a display 17. In the embodiment of figs. 5 and 6 the combination of the lawn maintenance vehicle 10 and the electronic device comprising the screen 17 is also understood as a lawn maintenance system.

Fig. 12 illustrates a method according to an embodiment where three maintenance paths are arranged in a first zone 4a of visually discernible pattern 3 to be generated in a lawn. As seen in the figure, there are two first overlaps 13 between the maintenance paths (each maintenance path having a width equal to the working width 18 of the lawn maintenance tool 9). Furthermore, is seen two second overlaps 14 with neighbouring zones (the second zone 4b to the left and a third zone 4 to the right of the first zone 4a).

### List of reference signs:

- 1: Lawn
- 2: Playing area
- 3: Visually discernible pattern
- 4: Zones
- 4a: First zone
- 4b: Second zone
- 5-8: Maintenance directions
- 9: Lawn maintenance tool
- 10: Lawn maintenance vehicle
- 11: Maintenance path
- 11a: First maintenance path
- 11b: Second maintenance path
- 12: Route
- 13: First overlap
- 14: Second overlap
- 15: Observer
- 16: Wheel
- 17: Display
- 18: Working width
- 19: Zone width
- 20: Guidance system
- 21: Electronic device
- 22: User interface
- 23: Digital representation of a lawn
- 24: Computer processing arrangement
- 25: Digital memory
- 26: Wireless transceiver
- 27: Lawn maintenance system
- S1-S4: Method steps

## Claims

1. A method for generating a visually discernible pattern (3) in a lawn (1), said method comprising the steps of:
- providing a lawn maintenance vehicle (10) on a lawn (1), said lawn maintenance vehicle (10) comprising a lawn maintenance tool (9),
- manoeuvring said lawn maintenance vehicle (10) on said lawn (1) such that said lawn maintenance tool (9) travels along a plurality of maintenance paths (11) including a first maintenance path (11a) and a second maintenance path (11b),
- wherein said plurality of maintenance paths (11) are calculated using a computer processing arrangement (24), said calculation being based on a digital representation (23) of said lawn and a pattern (3) to be generated in said lawn, said pattern (3) comprising a plurality of zones (4) including a first zone (4a) having a first lawn maintenance direction (5-8) and a second zone (4b) having a second lawn maintenance direction (5-8) different from said first lawn maintenance direction (5-8),
- wherein said first and second maintenance paths (11a; 11b) are arranged in said first zone (4a) such that a first overlap (13) is formed between said first and second maintenance paths (11a; 11b), wherein one of said first and second maintenance paths (11a; 11b) is arranged such that a second overlap (14) is formed between said one maintenance path (11a; 11b) and said second zone (4b), wherein said first overlap (13) is different from said second overlap (14), and
- wherein said visually discernible pattern (3) is generated in said lawn (1) by said lawn maintenance tool (9) being moved along said plurality of maintenance paths (11).

2. The method according to claim 1, wherein said second overlap (14) is smaller than said first overlap (13).

3. The method according to claim 1 or 2, wherein said second overlap (14) is user selectable.

4. The method according to any of the preceding claims, wherein said first maintenance path (11a) and said second maintenance path (11b) are arranged along said first lawn maintenance direction (5-8).

5. The method according to any of the preceding claims, wherein said step of manoeuvring comprises manoeuvring said lawn maintenance vehicle (10) such that two or more subsequent maintenance paths (11) along a route (12) comprising said plurality of maintenance paths are separated by a plurality of other maintenance paths (11) of said plurality of maintenance paths (11).

6. The method according to any of the preceding claims, wherein said step of manoeuvring said lawn maintenance vehicle (10) comprises manoeuvring said lawn maintenance vehicle (10) on the basis of input provided by a guidance system (20), such as a guidance system based on real-time kinematic positioning.

7. The method according to any of the preceding claims, wherein said step of manoeuvring said lawn maintenance vehicle (10) comprises engaging said lawn maintenance tool when said lawn maintenance tool (9) is travelling along said plurality of maintenance paths (11) and disengaging said lawn maintenance tool when said lawn maintenance vehicle (10) is manoeuvring in between said plurality of maintenance paths (11), such as automatically engaging said lawn maintenance tool (9) and automatically disengaging said lawn maintenance tool (9).

8. The method according to any of the preceding claims, wherein said method comprises a step of providing said digital representation (23) of said lawn (1), such as providing said digital representation in a digital memory (25).

9. The method according to any of the preceding claims, wherein said lawn maintenance vehicle (10) is operated by a driver, and wherein said method comprises conveying driving instructions to said driver of said lawn maintenance vehicle (10), said driving instructions being based on said calculated plurality of maintenance paths (11).

10. The method according to any of the preceding claims, wherein said lawn maintenance tool (9) is selected from a lawn mower, a lawn roller, a brush, a cultivator, a planer, a spike roller, one or more wheels, a lawn leveler, a groom, or any combination thereof.

11. The method according to any of the preceding claims, wherein each zone (4) of said plurality of zones (4) is associated with a constraint defining an allowable maintenance direction (5-8).

12. A lawn maintenance system (27) for generating a visually discernible pattern (3) in a lawn (3), said lawn maintenance system (27) comprising:
a lawn maintenance vehicle (10) comprising a lawn maintenance tool (9) for performing a maintenance operation to a lawn (1), and
a computer processing arrangement (24),
wherein, said lawn maintenance system (27) is configured to calculate, using said computer processing arrangement (24), a plurality of maintenance paths (11) to be followed by said lawn maintenance tool (9) including a first maintenance path (11a) and a second maintenance path (11b) arranged in a first zone (4a) of a pattern (3) to be generated in said lawn (1), wherein said calculation is based on a digital representation (23) of said lawn (1) and said pattern (3), said pattern (3) comprising a plurality of zones (4) including said first zone (4a) having a first lawn maintenance direction (5-8) and a second zone (4b) having a second lawn maintenance direction (5-8) different from said first lawn maintenance direction (5-8), wherein said first and second maintenance paths (11a; 11b) are arranged in said first zone (4a) such that a first overlap (13) is formed between said first and second maintenance paths (11a; 11b), wherein one of said first and second maintenance paths (11a; 11b) is arranged such that a second overlap (14) is formed between said one maintenance path (11a; 11b) and said second zone (4b), wherein said first overlap (13) is different from said second overlap (14).

13. The lawn maintenance system (27) according to claim 12, wherein said lawn maintenance vehicle (10) is configured to automatically manoeuvre according to a route (12) comprising said plurality of maintenance paths (11), wherein said route (12) is calculated using said computer processing arrangement (24), wherein said lawn maintenance system (27) comprises a guidance system (20), and wherein said lawn maintenance vehicle (10) is configured to automatically manoeuvre on the basis of input provided by said guidance system (20).

14. The lawn maintenance system (27) according to claim 12 or 13, wherein said lawn maintenance vehicle (10) is configured to be operated by a driver, and wherein said lawn maintenance system (27) is configured to convey driving instructions to said driver, said driving instructions being based on said calculated plurality of maintenance paths (11), and wherein said lawn maintenance system (27) comprises a display (17), and wherein said lawn maintenance system (27) is configured to convey said driving instructions using said display (17) for displaying driving instructions to a driver of said lawn maintenance vehicle (10).

15. A computer program comprising instructions which, when the program is executed by a computer, cause the computer to carry out the steps of:
- providing a digital representation (23) of a lawn (1),
- providing a pattern (3) to be generated in said lawn (1), said pattern (3) comprising a plurality of zones (4) including a first zone (4a) and a second zone (4b),
- calculating a vehicle path (12) to be followed by a lawn maintenance vehicle (10) on said lawn (1) on the basis of said digital representation (23) and said pattern (3), wherein said vehicle path (12) comprises at least two vehicle path sections (11) in said first zone (4a) extending in a same direction, wherein said at least two vehicle path sections (11) are arranged such that a first partial overlap (13) is formed between said two vehicle path sections (11), wherein at least one vehicle path section (11) of said at least two vehicle path sections (11) in said first zone (4a) is arranged such that a second partial overlap (14) is formed in between said at least one vehicle path section (11) and said second zone (4b) and, said second partial overlap (14) being smaller than said first partial overlap (13), and
- generating and outputting driving signals for a lawn maintenance vehicle (10) on the basis of said vehicle path (12) for the purpose of generating a visually discernible pattern (3) in said lawn (1).

## Patentansprüche

1. Verfahren zum Erzeugen eines visuell erkennbaren Musters (3) in einem Rasen (1), das Verfahren umfassend die Schritte:
- Bereitstellen eines Rasenpflegefahrzeugs (10) auf einem Rasen (1), das Rasenpflegefahrzeug (10) umfassend ein Rasenpflegewerkzeug (9),
- Manövrieren des Rasenpflegefahrzeugs (10) auf dem Rasen (1), derart, dass das Rasenpflegewerkzeug (9) entlang einer Vielzahl von Pflegepfaden (11) wandert, einschließlich eines ersten Pflegepfads (11a) und eines zweiten Pflegepfads (11b),
- wobei die Vielzahl von Pflegepfaden (11) unter Verwendung einer Computerverarbeitungsanordnung (24) berechnet werden, wobei die Berechnung auf einer digitalen Darstellung (23) des Rasens und einem in dem Rasen zu erzeugenden Muster (3) basiert, das Muster (3) umfassend eine Vielzahl von Zonen (4), einschließlich einer ersten Zone (4a), die eine erste Rasenpflegerichtung (5-8) aufweist, und einer zweiten Zone (4b), die eine zweite Rasenpflegerichtung (5-8), die sich von der ersten Rasenpflegerichtung (5-8) unterscheidet, aufweist,
- wobei der erste und der zweite Pflegepfad (11a; 11b) in der ersten Zone (4a) angeordnet sind, derart, dass eine erste Überlappung (13) zwischen dem ersten und dem zweiten Pflegepfad (11a; 11b) ausgebildet wird, wobei einer von dem ersten und dem zweiten Pflegepfad (11a; 11b) angeordnet ist, derart, dass eine zweite Überlappung (14) zwischen dem einen Pflegepfad (11a; 11b) und der zweiten Zone (4b) ausgebildet wird, wobei sich die erste Überlappung (13) von der zweiten Überlappung (14) unterscheidet, und
- wobei das visuell erkennbare Muster (3) in dem Rasen (1) dadurch erzeugt wird, dass das Rasenpflegewerkzeug (9) entlang der Vielzahl von Pflegepfaden (11) bewegt wird.

2. Verfahren nach Anspruch 1, wobei die zweite Überlappung (14) kleiner als die erste Überlappung (13) ist.

3. Verfahren nach Anspruch 1 oder 2, wobei die zweite Überlappung (14) benutzerauswählbar ist.

4. Verfahren nach einem der vorstehenden Ansprüche, wobei der erste Pflegepfad (11a) und der zweite Pflegepfad (11b) entlang der ersten Rasenpflegerichtung (5-8) angeordnet sind.

5. Verfahren nach einem der vorstehenden Ansprüche, wobei der Schritt des Manövrierens das Manövrieren des Rasenpflegefahrzeugs (10) umfasst, derart, dass zwei oder mehr aufeinanderfolgende Pflegepfade (11) entlang einer Route (12), umfassend die Vielzahl von Pflegepfaden, durch eine Vielzahl von anderen Pflegepfaden (11) der Vielzahl von Pflegepfaden (11) getrennt sind.

6. Verfahren nach einem der vorstehenden Ansprüche, wobei der Schritt des Manövrierens des Rasenpflegefahrzeugs (10) das Manövrieren des Rasenpflegefahrzeugs (10) auf der Basis einer Eingabe, die durch ein Leitsystem (20), wie ein Leitsystem, das auf Echtzeit-Kinematik-Positionierung basiert, bereitgestellt wird, umfasst.

7. Verfahren nach einem der vorstehenden Ansprüche, wobei der Schritt des Manövrierens des Rasenpflegefahrzeugs (10) ein Einschalten des Rasenpflegewerkzeugs, wenn das Rasenpflegewerkzeug (9) entlang der Vielzahl von Pflegepfaden (11) wandert, und ein Ausschalten des Rasenpflegewerkzeugs, wenn das Rasenpflegefahrzeug (10) zwischen der Vielzahl von Pflegepfaden (11) manövriert, umfasst, wie automatisches Einschalten des Rasenpflegewerkzeugs (9) und automatisches Ausschalten des Rasenpflegewerkzeugs (9).

8. Verfahren nach einem der vorstehenden Ansprüche, wobei das Verfahren einen Schritt des Bereitstellens der digitalen Darstellung (23) des Rasens (1) umfasst, wie das Bereitstellen der digitalen Darstellung in einem digitalen Speicher (25).

9. Verfahren nach einem der vorstehenden Ansprüche, wobei das Rasenpflegefahrzeug (10) durch einen Fahrer bedient wird, und wobei das Verfahren ein Übermitteln von Fahranweisungen an den Fahrer des Rasenpflegefahrzeugs (10) umfasst, wobei die Fahranweisungen auf der berechneten Vielzahl von Pflegepfaden (11) basieren.

10. Verfahren nach einem der vorstehenden Ansprüche, wobei das Rasenpflegewerkzeug (9) aus einem Rasenmäher, einer Rasenwalze, einer Bürste, einem Grubber, einem Planierer, einer Stachelwalze, einem oder mehreren Rädern, einem Rasennivellierer, einem Striegel oder jeder Kombination davon ausgewählt ist.

11. Verfahren nach einem der vorstehenden Ansprüche, wobei jede Zone (4) der Vielzahl von Zonen (4) mit einer Beschränkung, die eine zulässige Pflegerichtung (5-8) definiert, verknüpft ist.

12. Rasenpflegesystem (27) zum Erzeugen eines visuell erkennbaren Musters (3) in einem Rasen (3), das Rasenpflegesystem (27) umfassend:
ein Rasenpflegefahrzeug (10), umfassend ein Rasenpflegewerkzeug (9) zum Durchführen eines Pflegevorgangs an einem Rasen (1), und
eine Computerverarbeitungsanordnung (24),
wobei das Rasenpflegesystem (27) konfiguriert ist, um, unter Verwendung der Computerverarbeitungsanordnung (24), eine Vielzahl von durch das Rasenpflegewerkzeug (9) zu folgenden Pflegepfaden (11) zu berechnen, einschließlich eines ersten Pflegepfads (11a) und eines zweiten Pflegepfads (11b), die in einer ersten Zone (4a) eines in dem Rasen (1) zu erzeugenden Musters (3) angeordnet sind, wobei die Berechnung auf einer digitalen Darstellung (23) des Rasens (1) und des Musters (3) basiert, das Muster (3) umfassend eine Vielzahl von Zonen (4), einschließlich der ersten Zone (4a), die eine erste Rasenpflegerichtung (5-8) aufweist, und einer zweiten Zone (4b), die eine zweite Rasenpflegerichtung (5-8), die sich von der ersten Rasenpflegerichtung (5-8) unterscheidet, aufweist, wobei der erste und der zweite Pflegepfad (11a; 11b) in der ersten Zone (4a) angeordnet sind, derart, dass eine erste Überlappung (13) zwischen dem ersten und dem zweiten Pflegepfad (11a; 11b) ausgebildet wird, wobei einer von dem ersten und dem zweiten Pflegepfad (11a; 11b) angeordnet ist, derart, dass eine zweite Überlappung (14) zwischen dem einen Pflegepfad (11a; 11b) und der zweiten Zone (4b) ausgebildet wird, wobei sich die erste Überlappung (13) von der zweiten Überlappung (14) unterscheidet.

13. Rasenpflegesystem (27) nach Anspruch 12, wobei das Rasenpflegefahrzeug (10) konfiguriert ist, um gemäß einer Route (12), umfassend die Vielzahl von Pflegepfaden (11), automatisch zu manövrieren, wobei die Route (12) unter Verwendung der Computerverarbeitungsanordnung (24) berechnet wird, wobei das Rasenpflegesystem (27) ein Leitsystem (20) umfasst, und wobei das Rasenpflegefahrzeug (10) konfiguriert ist, um auf der Basis einer Eingabe, die durch das Leitsystem (20) bereitgestellt wird, automatisch zu manövrieren.

14. Rasenpflegesystem (27) nach Anspruch 12 oder 13, wobei das Rasenpflegefahrzeug (10) konfiguriert ist, um durch einen Fahrer bedient zu werden, und wobei das Rasenpflegesystem (27) konfiguriert ist, um Fahranweisungen an den Fahrer zu übermitteln, wobei die Fahranweisungen auf der berechneten Vielzahl von Pflegepfaden (11) basieren, und wobei das Rasenpflegesystem (27) eine Anzeige (17) umfasst, und wobei das Rasenpflegesystem (27) konfiguriert ist, um die Fahranweisungen unter Verwendung der Anzeige (17) zum Anzeigen von Fahranweisungen an einen Fahrer des Rasenpflegefahrzeugs (10) zu übermitteln.

15. Computerprogramm, umfassend Anweisungen, die, wenn das Programm durch einen Computer ausgeführt wird, den Computer veranlassen, die Schritte umzusetzen:
- Bereitstellen einer digitalen Darstellung (23) eines Rasens (1),
- Bereitstellen eines in dem Rasen (1) zu erzeugenden Musters (3), das Muster (3) umfassend eine Vielzahl von Zonen (4), einschließlich einer ersten Zone (4a) und einer zweiten Zone (4b),
- Berechnen eines durch ein Rasenpflegefahrzeug (10) zu folgenden Fahrzeugpfads (12) auf dem Rasen (1) auf der Basis der digitalen Darstellung (23) und des Musters (3), wobei der Fahrzeugpfad (12) mindestens zwei Fahrzeugpfadbereiche (11) in der ersten Zone (4a), die sich in eine selbe Richtung erstrecken, umfasst, wobei die mindestens zwei Fahrzeugpfadbereiche (11) angeordnet sind, derart, dass eine erste teilweise Überlappung (13) zwischen den zwei Fahrzeugpfadbereichen (11) ausgebildet wird, wobei mindestens ein Fahrzeugpfadbereich (11) der mindestens zwei Fahrzeugpfadbereiche (11) in der ersten Zone (4a) angeordnet ist, derart, dass eine zweite teilweise Überlappung (14) zwischen dem mindestens einen Fahrzeugpfadbereich (11) und der zweiten Zone (4b) ausgebildet wird, und die zweite teilweise Überlappung (14) kleiner als die erste teilweise Überlappung (13) ist, und
- Erzeugen und Ausgeben von Fahrsignalen für ein Rasenpflegefahrzeug (10) auf der Basis des Fahrzeugpfads (12) für den Zweck des Erzeugens eines visuell erkennbaren Musters (3) in dem Rasen (1).

## Revendications

1. Procédé permettant de générer un motif visuellement discernable (3) dans une pelouse (1), ledit procédé comprenant les étapes consistant à :
- fournir un véhicule d'entretien de pelouse (10) sur une pelouse (1), ledit véhicule d'entretien de pelouse (10) comprenant un outil d'entretien de pelouse (9),
- manœuvrer ledit véhicule d'entretien de pelouse (10) sur ladite pelouse (1) de telle sorte que ledit outil d'entretien de pelouse (9) se déplace le long d'une pluralité de trajectoires d'entretien (11) comportant une première trajectoire d'entretien (11a) et une seconde trajectoire d'entretien (11b),
- dans lequel ladite pluralité de trajectoires d'entretien (11) sont calculées à l'aide d'un agencement de traitement par ordinateur (24), ledit calcul étant en fonction d'une représentation numérique (23) de ladite pelouse et d'un motif (3) à générer dans ladite pelouse, ledit motif (3) comprenant une pluralité de zones (4) comportant une première zone (4a) ayant une première direction d'entretien de pelouse (5-8) et une seconde zone (4b) ayant une seconde direction d'entretien de pelouse (5-8) différente de ladite première direction d'entretien de pelouse (5-8),
- dans lequel lesdites première et seconde trajectoires d'entretien (11a ; 11b) sont agencées dans ladite première zone (4a) de telle sorte qu'un premier chevauchement (13) est formé entre lesdites première et seconde trajectoires d'entretien (11a ; 11b), dans lequel l'une desdites première et seconde trajectoires d'entretien (11a ; 11b) est agencée de telle sorte qu'un second chevauchement (14) est formé entre ladite trajectoire d'entretien (11a ; 11b) précitée et ladite seconde zone (4b), dans lequel ledit premier chevauchement (13) est différent dudit second chevauchement (14), et
- dans lequel ledit motif visuellement discernable (3) est généré dans ladite pelouse (1) par ledit outil d'entretien de pelouse (9) étant déplacé le long de ladite pluralité de trajectoires d'entretien (11).

2. Procédé selon la revendication 1, dans lequel ledit second chevauchement (14) est plus petit que ledit premier chevauchement (13).

3. Procédé selon la revendication 1 ou 2, dans lequel ledit second chevauchement (14) est sélectionnable par l'utilisateur.

4. Procédé selon l'une quelconque des revendications précédentes, dans lequel ladite première trajectoire d'entretien (11a) et ladite seconde trajectoire d'entretien (11b) sont agencées le long de ladite première direction d'entretien de pelouse (5-8).

5. Procédé selon l'une quelconque des revendications précédentes, dans lequel ladite étape consistant à manœuvrer comprend le fait de manœuvrer ledit véhicule d'entretien de pelouse (10) de telle sorte que deux trajectoires d'entretien (11) successives ou plus le long d'un chemin (12) comprenant ladite pluralité de trajectoires d'entretien sont séparées par une pluralité d'autres trajectoires d'entretien (11) de ladite pluralité de trajectoires d'entretien (11).

6. Procédé selon l'une quelconque des revendications précédentes, dans lequel ladite étape consistant à manœuvrer ledit véhicule d'entretien de pelouse (10) comprend le fait de manœuvrer ledit véhicule d'entretien de pelouse (10) en fonction d'une entrée fournie par un système de guidage (20), tel qu'un système de guidage en fonction d'un positionnement cinématique temps réel.

7. Procédé selon l'une quelconque des revendications précédentes, dans lequel ladite étape consistant à manœuvrer ledit véhicule d'entretien de pelouse (10) comprend l'engagement dudit outil d'entretien de pelouse lorsque ledit outil d'entretien de pelouse (9) se déplace le long de ladite pluralité de trajectoires d'entretien (11) et le désengagement dudit outil d'entretien de pelouse lorsque ledit véhicule d'entretien de pelouse (10) est en train de manœuvrer entre ladite pluralité de trajectoires d'entretien (11), tel qu'un engagement automatique dudit outil d'entretien de pelouse (9) et un désengagement automatique dudit outil d'entretien de pelouse (9).

8. Procédé selon l'une quelconque des revendications précédentes, dans lequel ledit procédé comprend une étape de fourniture de ladite représentation numérique (23) de ladite pelouse (1), telle que la fourniture de ladite représentation numérique dans une mémoire numérique (25).

9. Procédé selon l'une quelconque des revendications précédentes, dans lequel ledit véhicule d'entretien de pelouse (10) est mis en fonctionnement par un conducteur, et dans lequel ledit procédé comprend l'acheminement d'instructions de conduite audit conducteur dudit véhicule d'entretien de pelouse (10), lesdites instructions de conduite étant en fonction de ladite pluralité calculée de trajectoires d'entretien (11).

10. Procédé selon l'une quelconque des revendications précédentes, dans lequel ledit outil d'entretien de pelouse (9) est choisi parmi une tondeuse à gazon, un rouleau de pelouse, une brosse, un cultivateur, une raboteuse, un rouleau à pointes, une ou plusieurs roues, une niveleuse de pelouse, un brosseur, ou l'une quelconque combinaison de ceux-ci.

11. Procédé selon l'une quelconque des revendications précédentes, dans lequel chaque zone (4) de ladite pluralité de zones (4) est associée à une contrainte définissant une direction d'entretien admissible (5-8).

12. Système d'entretien de pelouse (27) permettant de générer un motif visuellement discernable (3) dans une pelouse (3), ledit système d'entretien de pelouse (27) comprenant :
un véhicule d'entretien de pelouse (10) comprenant un outil d'entretien de pelouse (9) permettant de mettre en œuvre une opération d'entretien sur une pelouse (1), et
un agencement de traitement par ordinateur (24),
dans lequel, ledit système d'entretien de pelouse (27) est configuré pour calculer, à l'aide dudit agencement de traitement par ordinateur (24), une pluralité de trajectoires d'entretien (11) à suivre par ledit outil d'entretien de pelouse (9) comportant une première trajectoire d'entretien (11a) et une seconde trajectoire d'entretien (11b) agencées dans une première zone (4a) d'un motif (3) à générer dans ladite pelouse (1), dans lequel ledit calcul est en fonction d'une représentation numérique (23) de ladite pelouse (1) et dudit motif (3), ledit motif (3) comprenant une pluralité de zones (4) comportant ladite première zone (4a) ayant une première direction d'entretien de pelouse (5-8) et une seconde zone (4b) ayant une seconde direction d'entretien de pelouse (5-8) différente de ladite première direction d'entretien de pelouse (5-8), dans lequel lesdites première et seconde trajectoires d'entretien (11a ; 11b) sont agencées dans ladite première zone (4a) de telle sorte qu'un premier chevauchement (13) est formé entre lesdites première et seconde trajectoires d'entretien (11a ; 11b), dans lequel l'une desdites première et seconde trajectoires d'entretien (11a ; 11b) est agencée de telle sorte qu'un second chevauchement (14) est formé entre ladite trajectoire d'entretien (11a ; 11b) précitée et ladite seconde zone (4b), dans lequel ledit premier chevauchement (13) est différent dudit second chevauchement (14).

13. Système d'entretien de pelouse (27) selon la revendication 12, dans lequel ledit véhicule d'entretien de pelouse (10) est configuré pour manœuvrer automatiquement selon un chemin (12) comprenant ladite pluralité de trajectoires d'entretien (11), dans lequel ledit chemin (12) est calculé à l'aide dudit agencement de traitement par ordinateur (24), dans lequel ledit système d'entretien de pelouse (27) comprend un système de guidage (20), et dans lequel ledit véhicule d'entretien de pelouse (10) est configuré pour manœuvrer automatiquement en fonction d'une entrée fournie par ledit système de guidage (20).

14. Système d'entretien de pelouse (27) selon la revendication 12 ou 13, dans lequel ledit véhicule d'entretien de pelouse (10) est configuré pour être mis en fonctionnement par un conducteur, et dans lequel ledit système d'entretien de pelouse (27) est configuré pour acheminer des instructions de conduite audit conducteur, lesdites instructions de conduite étant en fonction de ladite pluralité calculée de trajectoires d'entretien (11), et dans lequel ledit système d'entretien de pelouse (27) comprend un affichage (17), et dans lequel ledit système d'entretien de pelouse (27) est configuré pour acheminer lesdites instructions de conduite à l'aide dudit affichage (17) permettant d'afficher des instructions de conduite à un conducteur dudit véhicule d'entretien de pelouse (10).

15. Programme d'ordinateur comprenant des instructions qui, lorsque le programme est exécuté par un ordinateur, amènent l'ordinateur à effectuer des étapes consistant à :
- fournir une représentation numérique (23) d'une pelouse (1),
- fournir un motif (3) à générer dans ladite pelouse (1), ledit motif (3) comprenant une pluralité de zones (4) comportant une première zone (4a) et une seconde zone (4b),
- calculer une trajectoire de véhicule (12) à suivre par un véhicule d'entretien de pelouse (10) sur ladite pelouse (1) en fonction de ladite représentation numérique (23) et dudit motif (3), dans lequel ladite trajectoire de véhicule (12) comprend au moins deux sections de trajectoire de véhicule (11) dans ladite première zone (4a) s'étendant dans une même direction, dans lequel lesdites au moins deux sections de trajectoire de véhicule (11) sont agencées de telle sorte qu'un premier chevauchement partiel (13) est formé entre lesdites deux sections de trajectoire de véhicule (11), dans lequel au moins une section de trajectoire de véhicule (11) desdites au moins deux sections de trajectoire de véhicule (11) dans ladite première zone (4a) est agencée de telle sorte qu'un second chevauchement partiel (14) est formé entre ladite au moins une section de trajectoire de véhicule (11) et ladite seconde zone (4b) et, ledit second chevauchement partiel (14) étant plus petit que ledit premier chevauchement partiel (13), et
- la génération et la sortie de signaux de conduite pour un véhicule d'entretien de pelouse (10) en fonction de ladite trajectoire de véhicule (12) dans le but de générer un motif visuellement discernable (3) dans ladite pelouse (1).
